# EUROPEAN PATENT SPECIFICATION

(11) **EP 3 264 840 B1**
(45) Date of publication and mention of the grant of the patent: **03.04.2019**
(21) Application number: 15892956.2
(22) Date of filing: 28.05.2015
(51) Int. Cl.: H04W 64/00, G01S 5/02, H04W 88/02, H04W 88/08, H04W 84/12

(54) **TERMINAL DEVICE LOCATING METHOD, LOCATING SERVER, ACCESS POINT AND SYSTEM**
ENDGERÄTEVORRICHTUNGSLOKALISIERUNGSVERFAHREN, LOKALISIERUNGSSERVER, ZUGANGSPUNKT UND SYSTEM
PROCÉDÉ DE LOCALISATION DE DISPOSITIF TERMINAL, SERVEUR DE LOCALISATION, POINT D'ACCÈS ET SYSTÈME

(43) Date of publication of application: 03.01.2018
(73) Proprietor: Huawei Technologies Co. Ltd., Shenzhen, Guangdong 518129 (CN)
(72) Inventor: ZENG, Lijun, Shenzhen Guangdong 518129 (CN)
(74) Representative: Goddar, Heinz J.
(86) International application number: PCT/CN2015/080077
(87) International publication number: WO 2016/187875

(56) References cited:
- CN-A- 102 687 563
- CN-A- 103 763 680
- US-A1- 2006 075 131
- US-A1- 2007 286 160
- US-A1- 2014 120 947
- US-A1- 2014 235 266
- US-A1- 2015 094 085
- "3 Generation Partnership Project; Technical Specification Group Radio Access Network; Evolved Universal Terrestrial Radio Access (E-UTRA); Physical layer; Measurements (Release 12)", 3GPP STANDARD; 3GPP TS 36.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.2.0, 12 March 2015 (2015-03-12), pages 1-17, XP050928079, [retrieved on 2015-03-12]

## Description

### TECHNICAL FIELD

Embodiments of the present invention relate to the field of communications, and in particular, to a terminal device positioning method, a positioning server, an access point, and a system.

### BACKGROUND

At present, a manner of positioning a terminal by using wireless local area networks (Wireless Local Area Networks, WLAN) is increasingly widely applied, especially in an indoor scenario. Terminal location information obtained by means of WLAN positioning may be used for big data analytics, advertisement information precision release, indoor navigation, and the like.

At present, in a WLAN positioning technology, a positioning system acquires signal strengths from a same terminal to multiple access points (Access Point, AP), or signal strengths from multiple APs to a same terminal, and calculates, according to a positioning algorithm, a location of the terminal by using signal strength information. The signal strengths acquired by the positioning system may be measured and reported by a network side.

Main content of a method, provided in the prior art, for performing positioning according to signal strengths measured and reported by a network side is as follows: performing positioning by using signal strengths, of a same terminal, measured by three or more APs and reported to a positioning system. To ensure service performance, different channels are usually configured for multiple adjacent APs. For positioning reporting performed according to signal strengths from multiple APs to a same terminal, the following two manners are used: In one manner, a dedicated AP that is used for no service is deployed as a probe; in the other manner, an AP that carries a service periodically switches to a different channel, and then blindly waits for the terminal to send an uplink signal, and positioning reporting is performed according to the uplink signal obtained by means of scanning.

The prior art has the following disadvantages: The manner of deploying a probe significantly increases hardware costs. In the manner of scanning on a different channel, no matter an AP resides on the different channel for an excessively long time or an excessively short time, a problem exists. For example, if the AP resides on the different channel for an excessively short time, a probability of receiving an uplink packet is greatly reduced because a moment at which the terminal sends an uplink packet is uncertain, which causes a significant decrease in positioning accuracy. If the AP resides on the different channel for an excessively long time, heavy losses on lost service packets and on a service time of an air interface are caused, resulting in significant degradation in service performance. Therefore, to implement network-side positioning, a residence time of an AP on a different channel needs to be precisely controlled; however, it is difficult to implement precise control in reality.

US 2014/0120947 A1 discloses techniques for systems in which a measuring node is associated with multiple antenna, including techniques for selecting and configuring the set of receiving antennas suitable for performing uplink measurements for a given wireless device. A method for controlling measurements of radio signals transmitted by a wireless device includes: obtaining a receiving point configuration for at least one measuring node associated with two or more receiving points, and continues with selecting one or more receiving points for performing measurements, based on the obtained configuration. The selected receiving points are then configured for performing the measurements.

### SUMMARY

Embodiments of the present invention provide a terminal device positioning method, a positioning server, an access point, and a system, which are used to position a terminal according to a requirement, while the terminal does not need to proactively perform measurement, and impact on the access point is small.

According to a first aspect, an embodiment of the present invention provides a terminal device positioning method, where the method is applied in a wireless local area network, and includes:
receiving, by a positioning server, a location acquiring message sent by an application server, wherein the location acquiring message comprises an identifier of a terminal whose location information needs to be acquired by the application server;
acquiring, by the positioning server according to the identifier of the terminal, an access point set used for positioning the terminal, where the access point set includes an associated access point accessed by the terminal and a non-associated access point not accessed by the terminal, and the non-associated access point includes at least an access point whose coverage area covers the terminal;
acquiring, by the positioning server from the access point set, positioning measurement information that is obtained after the access point set interacts with the terminal, wherein through the interaction with the terminal, the access point set acquires the positioning measurement information; and
acquiring, by the positioning server, location information of the terminal according to the positioning measurement information;
after the acquiring, by the positioning server, location information of the terminal according to the positioning measurement information, sending (S13, P16), by the positioning server, the location information of the terminal to the application server.

With reference to the first aspect, in a first possible implementation manner of the first aspect, the acquiring, by the positioning server, positioning measurement information that is obtained after the access point set interacts with the terminal includes:
sending, by the positioning server, a positioning request message separately to the associated access point and the non-associated access point simultaneously, where the positioning request message includes the identifier of the terminal and a collaboration time, and the collaboration time is used to allow the associated access point and the non-associated access point to acquire positioning measurement information of the terminal in a collaborative manner after the collaboration time arrives; and
receiving, by the positioning server, the positioning measurement information that is obtained from the terminal by the associated access point and the non-associated access point according to the collaboration time.

With reference to the first aspect, in a second possible implementation manner of the first aspect, the acquiring, by the positioning server, positioning measurement information that is obtained after the access point set interacts with the terminal includes:
sending, by the positioning server, a positioning request message separately to the associated access point and the non-associated access point, where the positioning request message includes the identifier of the terminal; and
receiving, by the positioning server, positioning measurement information obtained from the terminal by the associated access point, and receiving positioning measurement information obtained from the terminal by the non-associated access point.

With reference to the first aspect, or the first possible implementation manner or the second possible implementation manner of the first aspect, in a third possible implementation manner of the first aspect, the acquiring, by the positioning server, location information of the terminal according to the positioning measurement information includes:
performing, by the positioning server, calculation on the positioning measurement information by using a triangulation positioning algorithm or a fingerprint positioning algorithm, to obtain the location information of the terminal.

According to a second aspect, an embodiment of the present invention provides a terminal device positioning method, where the method is applied in a wireless local area network, and includes:
receiving, by an associated access point, a positioning request message sent by a positioning server, where the positioning request message includes an identifier of a terminal whose location information needs to be acquired by an application server, the identifier of the terminal is obtained by the positioning server through a location acquiring message sent by an application server to the positioning server, and the associated access point belongs to an access point set that is acquired by the positioning server according to the identifier of the terminal;
interacting, by the associated access point, with the terminal according to the positioning request message, to obtain positioning measurement information of the terminal; and
sending, by the associated access point, the positioning measurement information to the positioning server.

With reference to the second aspect, in a first possible implementation manner of the second aspect, the interacting, by the associated access point, with the terminal according to the positioning request message, to obtain positioning measurement information of the terminal includes:
sending, by the associated access point, a positioning packet to the terminal according to the positioning request message;
receiving, by the associated access point, a positioning response packet sent by the terminal; and
generating, by the associated access point, the positioning measurement message according to the received positioning response packet.

With reference to the second aspect or the first possible implementation manner of the second aspect, in a second possible implementation manner of the second aspect, if the positioning request message further includes: a collaboration time acquired by the positioning server, where the collaboration time is used to allow the associated access point and a non-associated access point that is in the access point set to acquire positioning measurement information of the terminal in a collaborative manner after the collaboration time arrives,
the interacting, by the associated access point, with the terminal according to the positioning request message, to obtain positioning measurement information of the terminal includes:
interacting, by the associated access point, with the terminal according to the positioning request message after the collaboration time arrives, to obtain the positioning measurement information of the terminal.

According to a third aspect, an embodiment of the present invention provides a positioning server, including:
a positioning determining module, configured to receive a location acquiring message sent by an application server, wherein the location acquiring message comprises an identifier of a terminal whose location information needs to be acquired by the application server;
an access point acquiring module, configured to acquire, according to the identifier of the terminal, an access point set used for positioning the terminal, where the access point set includes an associated access point accessed by the terminal and a non-associated access point not accessed by the terminal, and the non-associated access point includes at least an access point whose coverage area covers the terminal;
a measurement information acquiring module, configured to acquire, from the access point set, positioning measurement information that is obtained after the access point set interacts with the terminal, wherein through the interaction with the terminal, the access point set acquires the positioning measurement information; and
a location information acquiring module, configured to acquire location information of the terminal according to the positioning measurement information and send the location information of the terminal to the application server.

With reference to the third aspect, in a first possible implementation manner of the third aspect, the measurement information acquiring module is specifically configured to send a positioning request message separately to the associated access point and the non-associated access point simultaneously, where the positioning request message includes the identifier of the terminal and a collaboration time, and the collaboration time is used to allow the associated access point and the non-associated access point to acquire positioning measurement information of the terminal in a collaborative manner after the collaboration time arrives; and receive the positioning measurement information that is obtained from the terminal by the associated access point and the non-associated access point according to the collaboration time.

With reference to the third aspect, in a second possible implementation manner of the third aspect, the measurement information acquiring module is specifically configured to send a positioning request message separately to the associated access point and the non-associated access point, where the positioning request message includes the identifier of the terminal; and receive positioning measurement information obtained from the terminal by the associated access point, and receive positioning measurement information obtained from the terminal by the non-associated access point.
third aspectthird aspectthird aspectWith reference to the third aspect, or the first possible implementation manner or the second possible implementation manner of the third aspect, in the third possible implementation manner of the third aspect, the location information acquiring module is specifically configured to perform calculation on the positioning measurement information by using a triangulation positioning algorithm or a fingerprint positioning algorithm, to obtain the location information of the terminal.

According to a fourth aspect, an embodiment of the present invention provides an access point, where the access point is specifically an associated access point accessed by a terminal that needs to be positioned, and the associated access point includes:
a receiving module, configured to receive a positioning request message sent by a positioning server, where the positioning request message includes an identifier of the terminal whose location information needs to be acquired by an application server, the identifier of the terminal is obtained by the positioning server through a location acquiring message sent by an application server to the positioning server, and the associated access point belongs to an access point set that is acquired by the positioning server according to the identifier of the terminal;
a measurement information acquiring module, configured to interact with the terminal according to the positioning request message, to obtain positioning measurement information of the terminal; and
a sending module, configured to send the positioning measurement information to the positioning server.

With reference to the fourth aspect, in a first possible implementation manner of the fourth aspect, the measurement information acquiring module is specifically configured to send a positioning packet to the terminal according to the positioning request message; receive a positioning response packet sent by the terminal; and generate the positioning measurement message according to the received positioning response packet.

With reference to the fourth aspect or the first possible implementation manner of the fourth aspect, in a second possible implementation manner of the fourth aspect, if the positioning request message further includes: a collaboration time acquired by the positioning server, where the collaboration time is used to allow the associated access point and a non-associated access point that is in the access point set to acquire positioning measurement information of the terminal in a collaborative manner after the collaboration time arrives,
the measurement information acquiring module is specifically configured to interact with the terminal according to the positioning request message after the collaboration time arrives, to obtain the positioning measurement information of the terminal.

It can be seen from the foregoing technical solutions that, the embodiments of the present invention have the following advantages:
In the embodiments of the present invention, a positioning server first acquires an identifier of a terminal that needs to be positioned; the positioning server acquires, according to the identifier of the terminal, an access point set used for positioning the terminal, where the access point set includes an associated access point accessed by the terminal and a non-associated access point not accessed by the terminal; the positioning server acquires positioning measurement information that is obtained after the access point set interacts with the terminal; and the positioning server acquires location information of the terminal according to the positioning measurement information, and sends the location information of the terminal to an application server. In terminal positioning of the present invention, after a positioning server acquires a terminal that needs to be positioned, the positioning server acquires, according to an identifier of the terminal, an access point set that can be used to perform positioning measurement on the terminal, and the access point set acquires positioning measurement information of the terminal through interaction with the terminal. Therefore, it can be avoided that an access point blindly waits for uplink information of the terminal; positioning efficiency is improved, and impact on each access point is small. Moreover, no specific application program needs to be implanted in a single terminal in the present invention, which is compatible with all terminals.

### BRIEF DESCRIPTION OF DRAWINGS

FIG. 1 is a schematic diagram of interaction relationships between entities in a function architecture of a terminal device positioning method according to an embodiment of the present invention;
FIG. 2 is a schematic block diagram of a process of a terminal device positioning method according to an embodiment of the present invention;
FIG. 3 is a schematic block diagram of a process of another terminal device positioning method according to an embodiment of the present invention;
FIG. 4 is a schematic block diagram of a process of a terminal device positioning method according to an example;
FIG 5 is a schematic flowchart of interactions between entities in a function architecture of a terminal device positioning method according to an embodiment of the present invention;
FIG. 6 is a schematic flowchart of interactions between entities in a function architecture of another terminal device positioning method according to an embodiment of the present invention;
FIG. 7 is a schematic structural diagram of composition of a positioning server according to an embodiment of the present invention;
FIG. 8 is a schematic structural diagram of composition of an associated access point according to an embodiment of the present invention;
FIG. 9-a is a schematic structural diagram of composition of a non-associated access point according to an example;

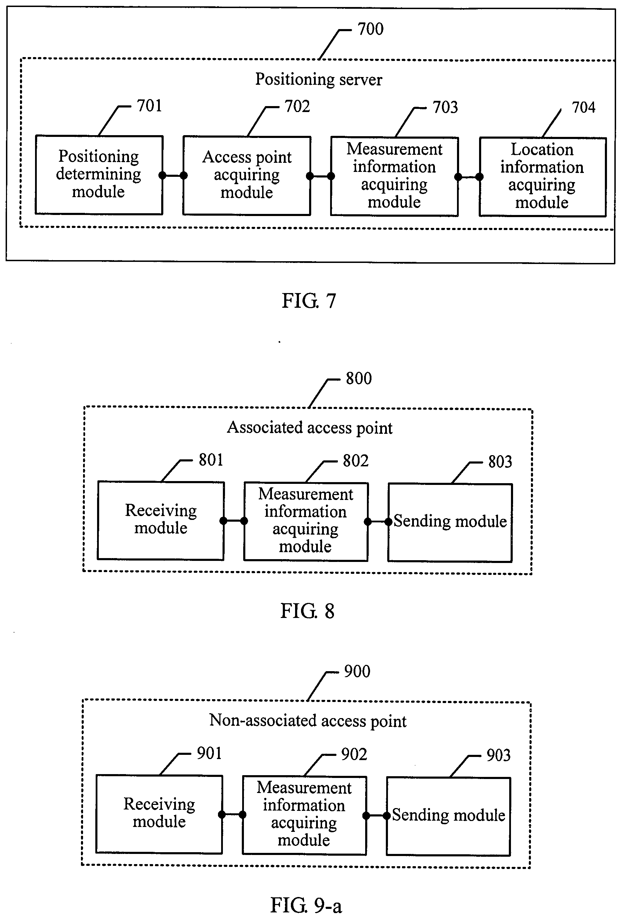

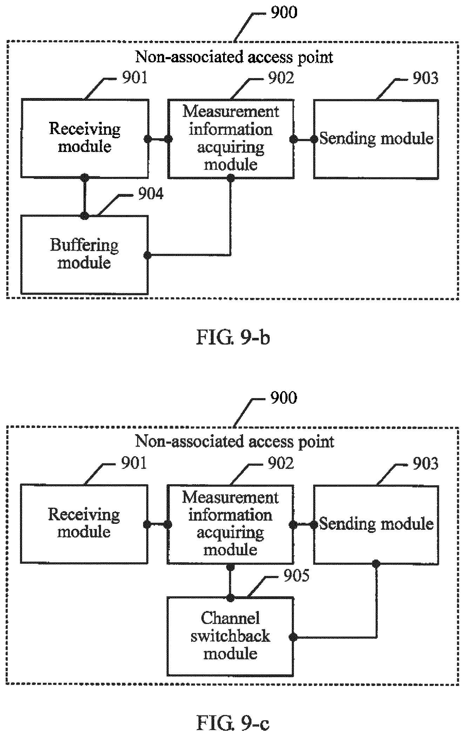

FIG. 9-b is a schematic structural diagram of composition of another non-associated access point according to an example;
FIG. 9-c is a schematic structural diagram of composition of another non-associated access point according to an example;

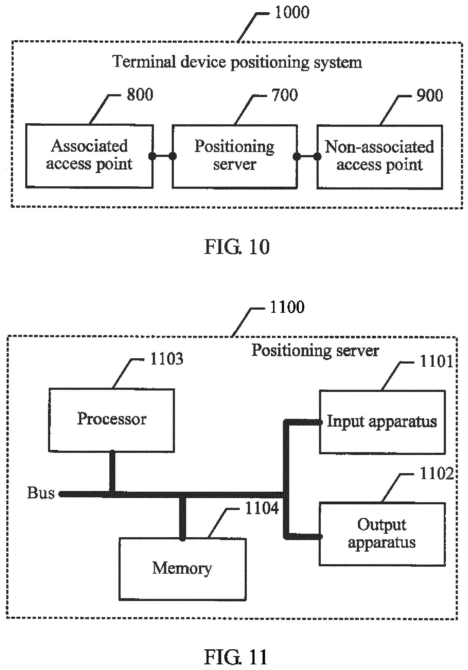

FIG. 10 is a schematic structural diagram of composition of a terminal device positioning system according to an embodiment of the present invention;
FIG. 11 is a schematic structural diagram of composition of another positioning server according to an embodiment of the present invention;

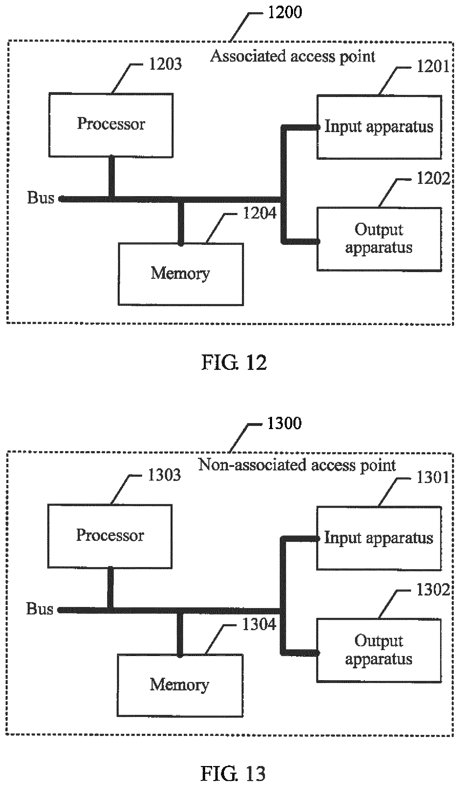

FIG. 12 is a schematic structural diagram of composition of another associated access point according to an embodiment of the present invention; and
FIG. 13 is a schematic structural diagram of composition of another non-associated access point according to an example.

### DESCRIPTION OF EMBODIMENTS

Embodiments of the present invention provide a terminal device positioning method, a positioning server, an access point, and a system, which are used to position a terminal according to a requirement, while the terminal does not need to proactively perform measurement, and impact on the access point is small.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by persons skilled in the art based on the embodiments of the present invention shall fall within the protection scope of the present invention.

In the specification, claims, and the foregoing drawings of the present invention, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Detailed descriptions are separately provided below.

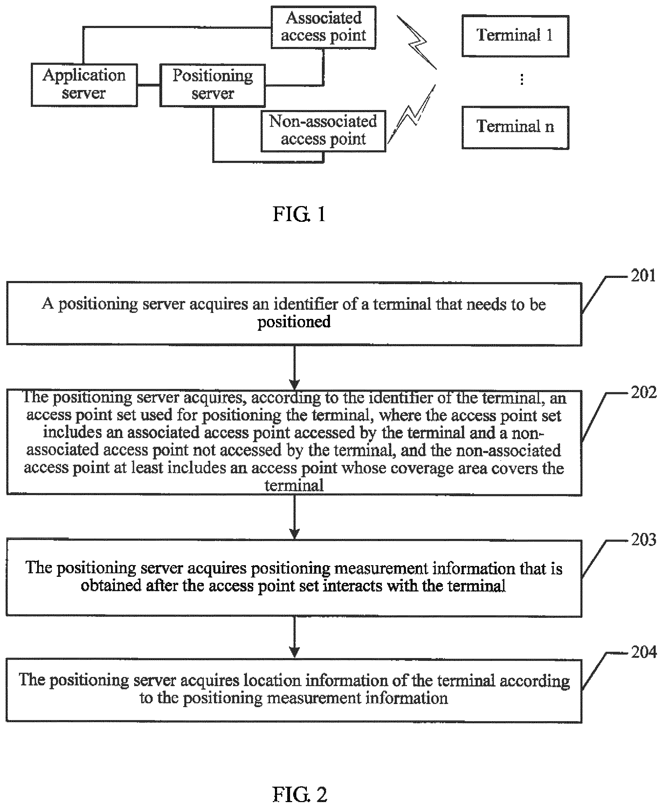

First, interaction relationships between entities in a function architecture of a terminal device positioning method in the embodiments of the present invention are described. As shown in FIG. 1, FIG. 1 is a schematic diagram of interaction relationships between entities in a function architecture of a terminal device positioning method according to an embodiment of the present invention. In the present invention, a positioning server serves as a platform that provides a positioning service, and on the positioning server, a positioning database and a positioning processing apparatus may be disposed. The positioning server establishes communication connections separately to multiple access points in a WLAN. An access point may provide, to one or more terminals, a communication service for contact with the external world. In FIG. 1, that there are a total of n terminals: terminal 1, ..., and terminal n separately, is used as an example, where n is a natural number. The positioning server is further connected to an application server, where the application server is an entity that provides an application service for a terminal. Under the request of the application server, the positioning server positions a terminal or multiple terminals. The positioning server selects an associated access point and a non-associated access point. The associated access point and the non-associated access point separately acquire, from the terminal or the multiple terminals, positioning measurement information reported by the terminal or the multiple terminals. Then, the associated access point and the non-associated access point send the respectively acquired positioning measurement information to the positioning server. The positioning server calculates location information of the terminal or the multiple terminals according to the positioning measurement information reported by the associated access point and the non-associated access point, and feeds back the calculated location information to the application server. According to the foregoing manner, the application server can acquire the location information of the terminal or the multiple terminals.

The terminal device positioning method in the present invention is described below separately from the perspectives of a positioning server and an access point.

First, an embodiment of a terminal device positioning method in the present invention is described, where the method may be applied in a wireless local area network, and specifically, may be applied to terminal positioning in the WLAN. Referring to FIG. 2, the terminal device positioning method provided in this embodiment of the present invention is first described from the perspective of a positioning server side. Specifically, the method may include the following steps:
201: A positioning server acquires an identifier of a terminal that needs to be positioned.

In this embodiment of the present invention, when a terminal or some terminals need to be positioned so as to acquire location information thereof, the positioning server first acquires an identifier of a terminal that needs to be positioned. If multiple terminals need to be positioned, the positioning server may acquire respective identifiers of the multiple terminals.

In some embodiments of the present invention, that a positioning server acquires an identifier of a terminal that needs to be positioned in step 201 may specifically include the following step: receiving, by the positioning server, a location acquiring message sent by an application server, where the location acquiring message includes an identifier of a terminal whose location information needs to be acquired by the application server.

In this embodiment of the present invention, the positioning server is a positioning service entity for providing terminal location information. The positioning server is connected to the application server, or the positioning server and the application server may be implemented by one physical entity, namely, one server. The receiving, by the positioning server, a location acquiring message sent by an application server is merely message sending completed in terms of functional implementation, and may be message interaction within a same server if the positioning server and the application server are a same physical entity. A positioning processing procedure executed by the positioning server is triggered by the application server. For example, a terminal sends an application service request to the application server, and the application server provides an application service for the terminal. When the application server needs to acquire location information of the terminal, the application server sends a location acquiring message to the positioning server. An identifier of the terminal may be used to indicate a specific terminal whose location information needs to be acquired by the positioning server. For example, an Internet Protocol (IP, Internet Protocol) address of the terminal may be used as the identifier of the terminal, or other unique information of the terminal may be used as the identifier of the terminal, for example, an international mobile equipment identity (IMEI, International Mobile Equipment Identity) of the terminal is used as the identifier of the terminal. It should be noted that, in this embodiment of the present invention, one or more a terminal identifier that the application server adds to the location acquiring message may be specifically a wildcard character, and after acquiring the wildcard character from the location acquiring message, the positioning server may determine which terminal or which terminals need to be positioned. In addition, in the present invention, the terminal identifier carried in the location acquiring message may be specifically identified by using a character that is agreed by the application server and the positioning server in advance. For example, if the application server adds no specific message to a fixed field of the location acquiring message, the positioning server may determine that all terminals served by the application server need to be positioned. Specific implementation is not limited herein.

For example, the application server may be any server running an application that needs to acquire a location of a terminal. The terminal accesses the application server to browse webpage information provided by the server, and the application server needs to acquire the location of the terminal, so as to perform filtering on displayed content. In this case, the application server may send a location acquiring request message to the positioning server.

It should be noted that, the positioning server provided in this embodiment of the present invention may be specifically deployed on one side of a service anchor (SVA, Service Anchor) or an access controller (AC, Access Controller), or the positioning server and the SVA/AC may integrate one functional entity or multiple functional entities in their form, which does not affect functional implementation of the positioning server in the present invention. In addition, in this embodiment of the present invention, according to the terminal device positioning method executed on the positioning server side, positioning on demand can be implemented, that is, the positioning server can position a terminal according to a request of the application server, thereby reducing impact caused by positioning on access points and terminals.

In some embodiments of the present invention, before the application server sends the location acquiring message to the positioning server, and after the application server receives the application service request sent by the terminal, the application server may further determine, according to a type of a service provided for the terminal or a location indicator carried on a terminal side, whether location information of the terminal needs to be acquired. If the application server determines that the location information of the terminal does not need to be acquired, the application server does not need to send the location acquiring message to the positioning server, or if the application server determines that the location information of the terminal needs to be acquired, the application server may send the location acquiring message to the positioning server. For example, if an application service provided by the application server for the terminal is irrelevant to a location, the application server does not need to send the location acquiring message to the positioning server.

202: The positioning server acquires, according to the identifier of the terminal, an access point set used for positioning the terminal, where the access point set includes an associated access point accessed by the terminal and a non-associated access point not accessed by the terminal, and the non-associated access point includes at least an access point whose coverage area covers the terminal.

In this embodiment of the present invention, after the positioning server learns, according to the location acquiring message sent by the application server, which terminal or which terminals need to be positioned, the positioning server may select, according to the acquired terminal identifier, an access point set that consists of multiple access points and that is used for positioning the terminal. For example, if the positioning server needs to position multiple terminals separately, the positioning server needs to acquire one access point set for each terminal. In addition, in this embodiment of the present invention, the access point set acquired by the positioning server may be determined by the positioning server; or the access point set may be determined by an access controller (AC, Access Controller) that manages access points, and after determining the access point set, the AC sends the access point set to the positioning server; or the positioning server and an AC may negotiate with each other to determine the access point set. A specific implementation manner may be determined with reference to an application scenario.

The access point set that is acquired by the positioning server for the terminal may include an associated access point accessed by the terminal and a non-associated access point not accessed by the terminal. The associated access point and the non-associated access point included in the access point set are used to perform positioning measurement on a terminal that needs to be positioned. In the present invention, the associated access point is an access point accessed by the terminal that needs to be positioned, and the non-associated access point may be a neighboring access point of the associated access point; the non-associated access point includes at least one or more access points whose coverage areas can cover the terminal that needs to be positioned. In addition, in the non-associated access point included in the access point set of the present invention, each access point may cover the terminal that needs to be positioned, or it is feasible that only some access points cover the terminal that needs to be positioned.

It should be noted that, in the present invention, the positioning server may establish communication connections to multiple access points, and the positioning server acquires the access point set according to the identifier of the terminal that needs to be positioned, where the access point set includes multiple access points screened out for the terminal that needs to be positioned, and the access points screened out may be used in location measurement of the terminal. A quantity of selected non-associated access points and which access point is selected as a non-associated access point may be determined by the positioning server and/or the AC according to positioning accuracy and signal strengths between access points and the terminal. For example, the non-associated access point may include two or more access points that have a strongest signal strength within a range that covers the terminal, which is not limited herein.

It should be noted that, in this embodiment of the present invention, an access point does not proactively position the terminal; instead, the access points for performing positioning measurement on the terminal are selected and managed by the positioning server and/or the AC. Therefore, it can be ensured that an original access point can normally provide a service within a coverage area thereof, and the access points selected by the positioning server and/or the AC can be used for positioning measurement of the terminal, while an access point that is not selected still undertakes an original service function.

203: The positioning server acquires positioning measurement information that is obtained after the access point set interacts with the terminal.

In this embodiment of the present invention, when acquiring the access point set for performing positioning measurement on the terminal, the positioning server may learn which access points are needed to perform positioning measurement on the terminal. The positioning server triggers the access point set to start performing positioning measurement on the terminal, and a coverage area of each access point in the access point set covers the terminal that needs to be positioned. The positioning server may acquire, from the access point set, the positioning measurement information of the terminal that is obtained by the access point set, where multiple access points (including the associated access point and the non-associated access point) in the access point set may acquire positioning measurement information of the terminal, and the positioning server may acquire the positioning measurement information of the terminal acquired by each of the foregoing access points.

In some embodiments of the present invention, that the positioning server acquires positioning measurement information that is obtained after the access point set interacts with the terminal in step 203 may specifically include the following steps:
A1: The positioning server sends a positioning request message separately to the associated access point and the non-associated access point simultaneously, where the positioning request message includes the identifier of the terminal and a collaboration time, and the collaboration time is used to allow the associated access point and the non-associated access point to acquire positioning measurement information of the terminal in a collaborative manner after the collaboration time arrives.
A2: The positioning server receives the positioning measurement information that is obtained from the terminal by the associated access point and the non-associated access point according to the collaboration time.

In an implementation manner of step A1 to step A2, the positioning server may use a collaborative positioning manner, in which the associated access point and the non-associated access point collaborate with each other. The positioning server sends a positioning request message separately to the associated access point and the non-associated access point simultaneously, where the positioning request message includes the identifier of the terminal and a collaboration time, and the collaboration time is used to allow the non-associated access point in the access point set to switch to an operating channel of the terminal after the collaboration time arrives, and instruct the associated access point in the access point set to start performing positioning measurement on the terminal. According to an indication of the collaboration time, the associated access point and the non-associated access point start to collaborate with each other, and jointly perform positioning measurement on the terminal, so that the associated access point and the non-associated access point separately acquire positioning measurement information of the terminal; the positioning server receives the positioning measurement information that is obtained from the terminal by the associated access point and the non-associated access point according to the collaboration time. In this implementation manner, all access points in the access point set need to acquire positioning measurement information of the terminal simultaneously. Therefore, efficiency of acquiring positioning measurement information is high, positioning is implemented fast, and the positioning server can acquire multiple pieces of positioning measurement information of the terminal earlier.

In some embodiments of the present invention, that the positioning server acquires positioning measurement information that is obtained after the access point set interacts with the terminal in step 203 may specifically include the following steps:
B1: The positioning server sends a positioning request message separately to the associated access point and the non-associated access point, where the positioning request message includes the identifier of the terminal.
B2: The positioning server receives positioning measurement information obtained from the terminal by the associated access point, and receives positioning measurement information obtained from the terminal by the non-associated access point.

In an implementation manner of step B1 to step B2, the positioning server may use a non-collaborative positioning manner, in which the associated access point and the non-associated access point operate independently. The positioning server may send a positioning request message separately to the associated access point and the non-associated access point; the associated access point and the non-associated access point acquire positioning information of the terminal independently, so that the associated access point and the non-associated access point separately acquire positioning measurement information of the terminal. The positioning server receives the positioning measurement information that is obtained by the associated access point from the terminal according to the collaboration time and the positioning measurement information that is obtained by the non-associated access point from the terminal according to the collaboration time. This implementation manner is different from the implementation manner in the foregoing embodiment; where the access points do not need to acquire positioning measurement information of the terminal simultaneously, and each access point may acquire the positioning measurement information of the terminal according to an idle or busy status of the access point, which has less restrictive requirements on the access points.

204: The positioning server acquires location information of the terminal according to the positioning measurement information.

In this embodiment of the present invention, after the positioning server acquires, from the access point set, multiple pieces of positioning measurement information of a same terminal, the positioning server calculates the location information of the terminal by using the multiple pieces of positioning measurement information, where the positioning server may calculate the location information of the terminal by using positioning measurement information acquired by multiple access points in the access point set. Specifically, that the positioning server acquires location information of the terminal according to the positioning measurement information in step 204 includes: the positioning server performs calculation on the positioning measurement information by using a triangulation positioning algorithm or a fingerprint positioning algorithm, to obtain the location information of the terminal. For example, according to positioning measurement information reported by each access point, the positioning server may determine signal strengths from multiple access points to a same terminal. The access points separately report signal strengths of the same terminal to the positioning server, and the positioning server calculates the location information of the terminal by using the signal strengths, from the multiple access points to the same terminal, acquired from the multiple access points. A positioning algorithm used by the positioning server may be a triangulation positioning algorithm, where the positioning server needs to acquire signal strengths of a same terminal that are separately reported by three or more access points, and the positioning server can calculate the location information of the terminal. In addition, in this embodiment of the present invention, the positioning algorithm used by the positioning server may also be a fingerprint positioning algorithm. Specifically, signal strengths from three access points to a same terminal need to be provided first, and then, search is performed in a fingerprint point data table of a database according to the three signal strengths. During a search process, the signal strengths of the access points that are searched for are within a range, and for each access point, a search result may include multiple fingerprint points; these fingerprint points are recorded, and a quantity of times is recorded; after three times of search, a fingerprint point recorded for three times is a positioning point.

In some embodiments of the present invention, if the positioning server receives the location acquiring message sent by the application server, after the acquiring, by the positioning server, location information of the terminal according to the positioning measurement information in step 204, the terminal device positioning method provided in the present invention may further include the following step: sending, by the positioning server, the location information of the terminal to the application server. Therefore, the positioning server can provide positioning information of a terminal or some terminals for the application server.

It can be learned from the description of the present invention provided in the foregoing embodiment that, a positioning server may acquire an identifier of a terminal that needs to be positioned; the positioning server acquires, according to the identifier of the terminal, an access point set used for positioning the terminal, where the access point set includes an associated access point accessed by the terminal and a non-associated access point not accessed by the terminal; the positioning server acquires positioning measurement information that is obtained after the access point set interacts with the terminal; and the positioning server acquires location information of the terminal according to the positioning measurement information. In terminal positioning of the present invention, after a positioning server acquires a terminal that needs to be positioned, the positioning server acquires, according to an identifier of the terminal, an access point set that can be used to perform positioning measurement on the terminal, and the access point set acquires positioning measurement information of the terminal through interaction with the terminal. Therefore, it can be avoided that an access point blindly waits for uplink information of the terminal; positioning efficiency is improved, and impact on each access point is small. Moreover, no specific application program needs to be implanted in a single terminal in the present invention, which is compatible with all terminals.

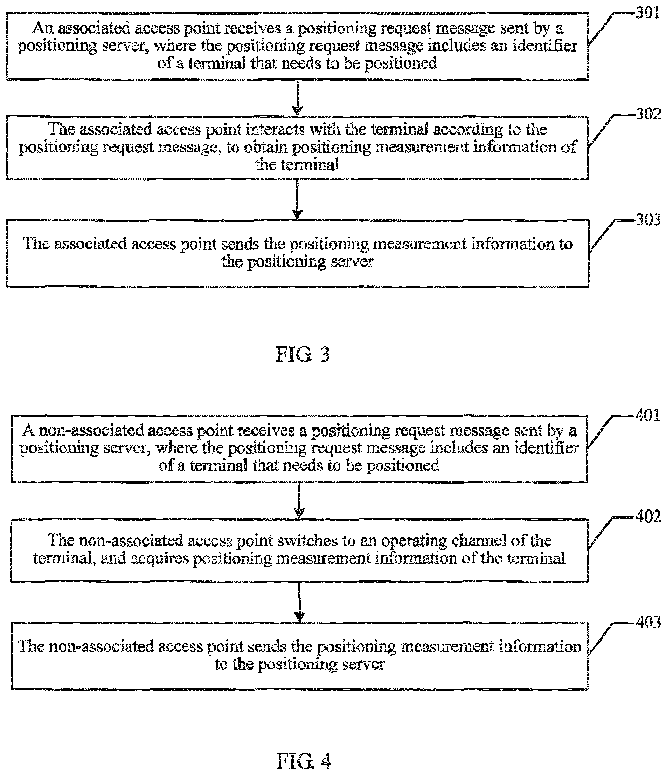

In the foregoing embodiment, an embodiment of the terminal device positioning method according to the present invention is described from the perspective of the positioning server side. Referring to FIG. 3, a terminal device positioning method provided in an embodiment of the present invention is described below from the perspective of an associated access point side. Specifically, the method may include the following steps:
301: An associated access point receives a positioning request message sent by a positioning server, where the positioning request message includes an identifier of a terminal that needs to be positioned.

The associated access point belongs to an access point set that is acquired by the positioning server according to the identifier of the terminal.

In this embodiment of the present invention, the positioning server is a positioning service entity for providing terminal location information. The positioning server is connected to an application server, and a positioning processing procedure executed by the positioning server is triggered by the application server.

It should be noted that, the access point provided in this embodiment of the present invention may be deployed on one side of an SVA or an AC, and the access point may provide an external communication service for a terminal by using the SVA/AC. Each access point may establish a communication connection to the positioning server. The positioning server delivers a positioning request instruction to the access point, and triggered by the positioning server, the access point performs positioning measurement on a terminal that accesses the access point or a terminal that does not access the access point. In this embodiment herein, the terminal device positioning method of the present invention is described from the perspective of an access point side accessed by a terminal (that is, an associated access point). The associated access point is accessed by the terminal that needs to be positioned, and the associated access point is an access point in the access point set acquired by the positioning server.

302: The associated access point interacts with the terminal according to the positioning request message, to obtain positioning measurement information of the terminal.

In this embodiment of the present invention, after receiving the positioning request message sent by the positioning server, the associated access point learns, according to the positioning request message, which terminal or which terminals the positioning server needs to position. The associated access point determines that a terminal needing to be positioned is within a coverage area of the access point and has accessed the access point; in this case, the associated access point interacts with the terminal needing to be positioned, and therefore can acquire positioning measurement information that is obtained after measurement is performed on the terminal.

In some embodiments of the present invention, if the positioning request message further includes: a collaboration time acquired by the positioning server, where the collaboration time is used to allow the associated access point and a non-associated access point that is in the access point set to acquire positioning measurement information of the terminal in a collaborative manner after the collaboration time arrives,
in this implementation scenario, that the associated access point interacts with the terminal according to the positioning request message, to obtain positioning measurement information of the terminal in step 302 may specifically include the following steps:
C1: The associated access point interacts with the terminal according to the positioning request message after the collaboration time arrives, to obtain the positioning measurement information of the terminal.

In other words, if the positioning server determines that a manner of acquiring the positioning measurement information is a manner of collaboration among multiple access points, the associated access point needs to follow an acquisition mechanism determined by the positioning server. According to an indication of the collaboration time, the associated access point can interact with the terminal only after the collaboration time arrives, so as to obtain the positioning measurement information of the terminal.

In some embodiments of the present invention, that the associated access point interacts with the terminal according to the positioning request message, to obtain positioning measurement information of the terminal in the foregoing step 302 may specifically include the following steps:
D1: The associated access point sends a positioning packet to the terminal according to the positioning request message.
D2: The associated access point receives a positioning response packet sent by the terminal.
D3: The associated access point generates the positioning measurement message according to the received positioning response packet.

The associated access point sends the positioning packet to the terminal, where the terminal is attached to the associated access point; after the terminal receives the positioning packet sent by the associated access point, in response to the positioning packet, the terminal sends the positioning response packet to the associated access point; the associated access point receives the positioning response packet sent by the terminal. By receiving the positioning response packet, the associated access point can measure a signal strength from the access point to the terminal, and generate the positioning measurement message that needs to be sent to the positioning server.

303: The associated access point sends the positioning measurement information to the positioning server.

In this embodiment of the present invention, after the associated access point acquires the positioning measurement information of the terminal, the associated access point sends the positioning measurement information to the positioning server, so that the positioning server can calculate location information of the terminal by using the positioning measurement information.

It can be learned from the description of the present invention provided in the foregoing embodiment that, an associated access point first receives a positioning request message sent by a positioning server; then the associated access point interacts with a terminal according to the positioning request message, to obtain positioning measurement information of the terminal; and finally, the associated access point sends the positioning measurement information to the positioning server. In the present invention, terminal positioning performed by the associated access point is triggered by the positioning server, and the associated access point proactively interacts with the terminal that needs to be positioned, to obtain the positioning measurement information of the terminal. Therefore, it can be avoided that the associated access point blindly waits for uplink information of the terminal; positioning efficiency is improved, and impact on the associated access point is small. Moreover, no specific application program needs to be implanted in a single terminal in the present invention, which is compatible with all terminals.

In the foregoing embodiment, an embodiment of the terminal device positioning method according to the present invention is described from the perspective of an associated access point side. Referring to FIG. 4, a terminal device positioning method provided in an example is described below from the perspective of a non-associated access point side. Specifically, the method may include the following steps:
401: A non-associated access point receives a positioning request message sent by a positioning server, where the positioning request message includes an identifier of a terminal that needs to be positioned.

The non-associated access point belongs to an access point set that is acquired by the positioning server according to the identifier of the terminal; the terminal does not access the non-associated access point, and the non-associated access point includes at least an access point whose coverage area covers the terminal.

In this example, the positioning server is a positioning service entity for providing terminal location information. The positioning server is connected to an application server, and a positioning processing procedure executed by the positioning server is triggered by the application server.

It should be noted that, the access point provided in this example may be deployed on one side of an SVA or an AC, and the access point may provide an external communication service for a terminal by using the SVA/AC. Each access point may establish a communication connection to the positioning server. The positioning server delivers a positioning request instruction to the access point, and triggered by the positioning server, the access point performs positioning measurement on a terminal that accesses the access point or a terminal that does not access the access point. In this example herein, the terminal device positioning method of the present example is described from the perspective of an access point side that has a terminal in a coverage area thereof but that is not accessed by the terminal (that is, a non-associated access point). The non-associated access point is not accessed by the terminal that needs to be positioned, but the coverage area of the non-associated access point covers the terminal; and the non-associated access point is an access point in the access point set acquired by the positioning server.

402: The non-associated access point switches to an operating channel of the terminal, and acquires positioning measurement information of the terminal.

In this example, after receiving the positioning request message sent by the positioning server, the non-associated access point learns, according to the positioning request message, which terminal or which terminals the positioning server needs to position. The non-associated access point learns that a terminal needing to be positioned is located in the coverage area of the access point but an operating channel of the access point is different from an operating channel of the terminal, that is, a different channel exists. In this case, in order to interact with the terminal that needs to be positioned, the non-associated access point needs to switch to the operating channel of the terminal, and then the non-associated access point interacts with the terminal (in the present example, interaction between the non-associated access point and the terminal may refer to that, the interaction in the present example can be implemented by means of at least one information transmission between the non-associated access point and the terminal); therefore, positioning measurement information obtained after measurement is performed on the terminal can be acquired.

In an example, if the positioning request message further includes: a collaboration time acquired by the positioning server, where the collaboration time is used to allow the non-associated access point to switch to an operating channel of the terminal after the collaboration time arrives,
in this implementation scenario, that the non-associated access point switches to an operating channel of the terminal, and acquires positioning measurement information of the terminal in step 402 may specifically include the following steps:
E1: The non-associated access point switches to the operating channel of the terminal when the collaboration time arrives, listens on the operating channel, and if the terminal sends a positioning response packet on the operating channel according to a positioning packet sent by an associated access point, receives the positioning response packet.
E2: The non-associated access point generates the positioning measurement message according to the received positioning response packet.

In other words, if the positioning server determines that a manner of acquiring the positioning measurement information is a manner of collaboration among multiple access points, the associated access point needs to follow an acquisition mechanism determined by the positioning server. According to an indication of the collaboration time, the associated access point sends a positioning packet to the terminal only after the collaboration time arrives. When the collaboration time arrives, the non-associated access point switches to the operating channel of the terminal, and in this case, the non-associated access point and the terminal are on the same channel. The non-associated access point listens on the operating channel, and if the terminal sends a positioning response packet on the operating channel according to the positioning packet sent by the associated access point, the non-associated access point receives the positioning response packet on the operating channel, so that the non-associated access point can measure a signal strength from the access point to the terminal, and generate the positioning measurement message that needs to be sent to the positioning server.

In an example , that the non-associated access point switches to an operating channel of the terminal, and acquires positioning measurement information of the terminal in step 402 may specifically include the following steps:
F1: After switching to the operating channel of the terminal, the non-associated access point sends a positioning packet to the terminal according to the positioning request message.
F2: The non-associated access point receives a positioning response packet sent by the terminal.
F3: The non-associated access point generates the positioning measurement message according to the received positioning response packet.

The non-associated access point sends the positioning packet to the terminal after switching to the operating channel of the terminal; after the terminal receives the positioning packet sent by the non-associated access point, in response to the positioning packet, the terminal sends the positioning response packet to the non-associated access point; the non-associated access point receives the positioning response packet sent by the terminal. By receiving the positioning response packet, the non-associated access point can measure a signal strength from the access point to the terminal, and generate the positioning measurement message that needs to be sent to the positioning server.

It should be noted that, in the present example, a response from the terminal is required for the positioning packet that is sent by the non-associated access point to the terminal in step F1. In a scenario in which a single access point is used to provide a service for the terminal, the terminal may be redesigned in the present example, so that the terminal can respond to the positioning packet sent by the non-associated access point. Because in the scenario in which a single access point is used to provide a service for the terminal, after accessing an associated access point, the terminal responds only to the associated access point. In the scenario in which a single access point is used to provide a service for the terminal, certainly, the terminal may not be modified in the present example; instead, a manner described in the following scenario is used, for example, the sending a positioning packet to the terminal according to the positioning request message in step F1 may specifically include the following step:
F11: The non-associated access point sends the positioning packet to the terminal by using an identity of an associated access point accessed by the terminal.

In the scenario in which a single access point is used to provide a service for the terminal, after accessing an associated access point, the terminal responds only to the associated access point, and the non-associated access point may send the positioning packet to the terminal by using an identity of the associated access point. That the non-associated access point uses an identity of the associated access point refers to that, when sending the positioning packet to the terminal, the non-associated access point may add an identifier of the associated access point to the positioning packet, so that the terminal confirms, according to the identifier of the associated access point, that the positioning packet is sent by the associated access point accessed by the terminal. In this case, the terminal directly responds to the positioning packet that carries the identifier of the associated access point, for example, the terminal sends an ACK packet, and the non-associated access point may also receive the positioning response packet sent by the terminal.

It should be noted that, in an example, before the switching, by the non-associated access point, to an operating channel of the terminal, and acquiring positioning measurement information of the terminal in step 402, the terminal device positioning method provided in the present example may further include the following steps:
G1: before the non-associated access point switches to the operating channel of the terminal, send a packet delivery stopping instruction to a terminal associated with the non-associated access point, so that the terminal associated with the non-associated access point temporarily stops sending an uplink packet to the non-associated access point;
   and/or
G2: before the non-associated access point switches to the operating channel of the terminal, buffer a downlink packet that is in the non-associated access point and that has not been sent.

Before the non-associated access point performs operating channel switching, the non-associated access point may silence a terminal to avoid uplink packet loss, or may buffer a packet to avoid downlink packet loss. Specifically, before operating channel switching, the non-associated access point may first control, by using a specific packet delivery stopping instruction signaling, the terminal to stop sending an uplink packet. For example, after the non-associated access point performs operating channel switching, packet loss may be avoided according to a network allocation vector (NAV, Network Allocation Vector), 802.11, or a customized dedicated packet.

It should be noted that, in an example, after the switching, by the non-associated access point, to an operating channel of the terminal, and acquiring positioning measurement information of the terminal in step 402, the terminal device positioning method provided in the present example may further include the following step:
HI: The non-associated access point switches back to an operating channel on which the non-associated access point stays before the non-associated access point switches to the operating channel of the terminal.

Specifically, after acquiring the positioning measurement information of the terminal, the non-associated access point may perform operating channel switchback immediately, to restore a service function of the access point. This step may be performed simultaneously with step 403, or may be performed before step 403.

403: The non-associated access point sends the positioning measurement information to the positioning server.

In this example, after the non-associated access point acquires the positioning measurement information of the terminal, the non-associated access point sends the positioning measurement information to the positioning server, so that the positioning server can calculate location information of the terminal by using the positioning measurement information.

It can be learned from the foregoing examples that, a non-associated access point first receives a positioning request message sent by a positioning server; then the non-associated access point switches to an operating channel of a terminal and acquires positioning measurement information of the terminal; and finally, the non-associated access point sends the positioning measurement information to the positioning server. In the present example, terminal positioning performed by the non-associated access point is triggered by the positioning server, and the non-associated access point interacts with the terminal that needs to be positioned, to obtain the positioning measurement information of the terminal. Therefore, it can be avoided that the non-associated access point blindly waits for uplink information of the terminal; positioning efficiency is improved, and impact on the non-associated access point is small. Moreover, no specific application program needs to be implanted in a single terminal in the present example, which is compatible with all terminals.

For better understanding and implementation of the foregoing solutions in the embodiments of the present invention, specific descriptions are provided below by using examples of corresponding application scenarios.

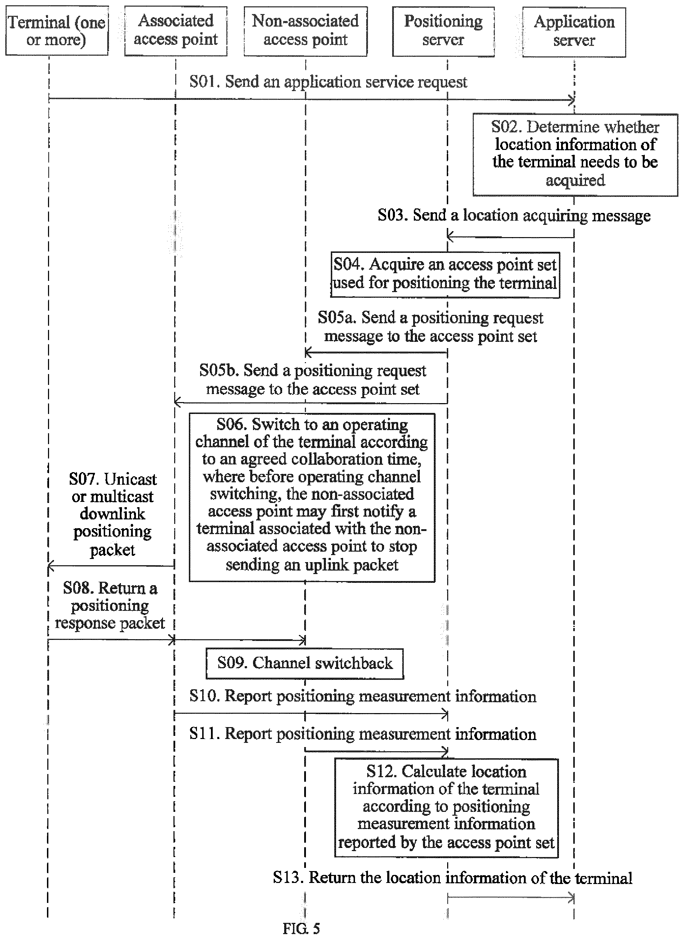

Referring to FIG. 5, FIG. 5 is a schematic flowchart of interactions between entities in a function architecture of a terminal device positioning method according to an embodiment of the present invention. An interaction process among a positioning server, an access point set, a terminal, and an application server is illustrated.
S01: One or more terminals separately send an application service request.
S02: An application server determines whether location information of the terminal needs to be acquired.
S03: The application server sends a location acquiring message to a positioning server, where the location acquiring message carries an identifier of a terminal that needs to be positioned.
S04: The positioning server acquires an access point set used for positioning the terminal, where the access point set includes an associated access point and a non-associated access point.
S05a and S05b: The positioning server sends a positioning request message to the access point set, where the positioning request message carries the identifier of the terminal and a collaboration time.
S06: The non-associated access point switches to an operating channel of the terminal according to the agreed collaboration time, where before operating channel switching, the non-associated access point may first instruct a terminal associated with the non-associated access point to stop sending an uplink packet, so as to avoid uplink packet loss.
S07: The associated access point sends a unicast or multicast downlink positioning packet, where if only one terminal needs to be positioned, a unicast downlink positioning packet is sent; if multiple terminals need to be positioned, a multicast downlink positioning packet needs to be sent.
S08: The terminal returns a positioning response packet, where the positioning response packet may be an acknowledgment (ACK, Acknowledgement) packet or a dedicated positioning unicast packet; in this case, both the associated access point and the non-associated access point can receive the positioning response packet on the operating channel of the terminal.
S09: The non-associated access point performs channel switchback.
S10: The associated access point reports positioning measurement information.
S11: The non-associated access point reports positioning measurement information.
S12: The positioning server calculates location information of the terminal according to the positioning measurement information reported by the access point set.
S13: The positioning server returns the location information of the terminal to the application server.

It can be learned from the description of the foregoing example that, in the present invention, when positioning accuracy is ensured, service performance of a system is improved. For example, a throughput rate of a non-associated access point is improved, a packet loss rate of the non-associated access point is reduced, and a latency caused by operating channel switching of the non-associated access point is reduced. Moreover, compared with the prior art, the present invention has the following improvement: positioning can be performed on demand. A terminal is positioned according to a request of an application server, reducing impact of positioning on a service. An optimal access point set for the terminal is acquired according to network side information (for example, signal strengths from the terminal to access points APs), to serve as an access point set used for positioning. Multiple access points proactively perform positioning in a collaborative manner. When a collaboration time arrives, an associated access point sends a positioning packet to the terminal, and another access point for positioning switches to an operating channel of the terminal according to the collaboration time, to receive a positioning response packet of the terminal. The positioning packet sent by the associated access point to the terminal may be a common data packet or a dedicated packet, and may be a unicast packet or a multicast packet.

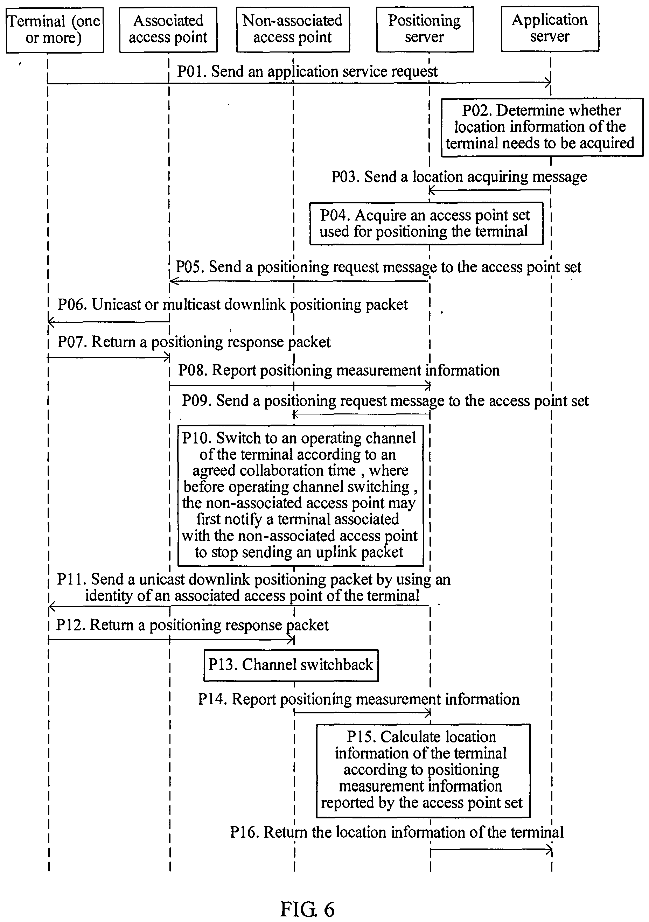

Referring to FIG. 6, FIG. 6 is a schematic flowchart of interactions between entities in a function architecture of another terminal device positioning method according to an embodiment of the present invention. An interaction process among a positioning server, an access point set, a terminal, and an application server is illustrated.
P01: One or more terminals separately send an application service request.
P02: An application server determines whether location information of the terminal needs to be acquired.
P03: The application server sends a location acquiring message to a positioning server, where the location acquiring message carries an identifier of a terminal that needs to be positioned.
P04: The positioning server acquires an access point set used for positioning the terminal, where the access point set includes an associated access point and a non-associated access point.
P05: The positioning server sends a positioning request message to the associated access point in the access point set, where the positioning request message carries the identifier of the terminal.
P06: The associated access point sends a unicast or multicast downlink positioning packet, where if only one terminal needs to be positioned, a unicast downlink positioning packet is sent; if multiple terminals need to be positioned, a multicast downlink positioning packet is sent.
P07: The terminal returns a positioning response packet, where the positioning response packet may be an ACK packet or a dedicated positioning unicast packet, and in this case, the associated access point can receive the positioning response packet.
P08: The associated access point reports positioning measurement information.
P09: The positioning server sends a positioning request message to the non-associated access point in the access point set, where the positioning request message carries the identifier of the terminal.
P10: The non-associated access point switches to an operating channel of the terminal, where before operating channel switching, the non-associated access point may first instruct a terminal associated with the non-associated access point to stop sending an uplink packet, so as to avoid uplink packet loss.
P11: The non-associated access point sends a unicast downlink positioning packet by using an identity of an associated access point by the terminal.
P12: The terminal returns a positioning response packet, where the positioning response packet may be an ACK packet or a dedicated positioning unicast packet, and in this case, the non-associated access point can receive the positioning response packet.
P13: The non-associated access point performs channel switchback.
P14: The non-associated access point reports positioning measurement information.
P15: The positioning server calculates location information of the terminal according to the positioning measurement information reported by the access point set.
P16: The positioning server returns the location information of the terminal to the application server.

It can be learned from the description of the foregoing example that, in the present invention, when positioning accuracy is ensured, service performance of a system is improved. For example, a throughput rate of a non-associated access point is improved, a packet loss rate of the non-associated access point is reduced, and a latency caused by operating channel switching of the non-associated access point is reduced. Moreover, compared with the prior art, the present invention has the following improvement: positioning can be performed on demand. A terminal is positioned according to a request of an application server, reducing impact of positioning on a service. An optimal access point set for the terminal is acquired according to network side information (for example, signal strengths from the terminal to access points APs), to serve as an access point set used for positioning. Multiple access points proactively perform positioning in a non-collaborative manner. A non-associated access point switches to an operating channel of the terminal; an associated access point and the non-associated access point separately send a positioning packet to the terminal, and receive response packets of the terminal. The positioning packets sent by the multiple access points to the terminal may be common data packets or dedicated packets, and may be unicast packets or multicast packets. The non-associated access point may send the positioning packet to the terminal by using an identity of the associated access point.

It should be noted that, for brief description, the foregoing method embodiments are described as a series of action combinations. However, persons skilled in the art should know that the present invention is not limited to the described action sequence, because according to the present invention, some steps may be performed in another sequence or performed simultaneously. In addition, persons skilled in the art should also know that all the embodiments described in the specification are exemplary embodiments, and the related actions and modules are not necessarily mandatory to the present invention.

To better implement the foregoing solutions in the embodiments of the present invention, related apparatuses used to implement the foregoing solutions are further provided below.

Referring to FIG. 7, a positioning server 700 provided in this embodiment of the present invention may include: a positioning determining module 701, an access point acquiring module 702, a measurement information acquiring module 703, and a location information acquiring module 704.

The positioning determining module 701 is configured to acquire an identifier of a terminal that needs to be positioned.

The access point acquiring module 702 is configured to acquire, according to the identifier of the terminal, an access point set used for positioning the terminal, where the access point set includes an associated access point accessed by the terminal and a non-associated access point not accessed by the terminal, and the non-associated access point includes at least an access point whose coverage area covers the terminal.

The measurement information acquiring module 703 is configured to acquire positioning measurement information that is obtained after the access point set interacts with the terminal.

The location information acquiring module 704 is configured to acquire location information of the terminal according to the positioning measurement information, and send the location information of the terminal to the application server.

In some embodiments of the present invention, the measurement information acquiring module 703 is specifically configured to send a positioning request message separately to the associated access point and the non-associated access point simultaneously, where the positioning request message includes the identifier of the terminal and a collaboration time, and the collaboration time is used to allow the associated access point and the non-associated access point to acquire positioning measurement information of the terminal in a collaborative manner after the collaboration time arrives; and receive the positioning measurement information that is obtained from the terminal by the associated access point and the non-associated access point according to the collaboration time.

In some embodiments of the present invention, the measurement information acquiring module 703 is specifically configured to send a positioning request message separately to the associated access point and the non-associated access point, where the positioning request message includes the identifier of the terminal; and receive positioning measurement information obtained from the terminal by the associated access point, and receive positioning measurement information obtained from the terminal by the non-associated access point.

In some embodiments of the present invention, the positioning determining module 701 is specifically configured to receive a location acquiring message sent by the application server, where the location acquiring message includes an identifier of a terminal whose location information needs to be acquired by the application server.

The location information acquiring module 704 is further configured to send the location information of the terminal to the application server.

In some embodiments of the present invention, the location information acquiring module 704 is specifically configured to perform calculation on the positioning measurement information by using a triangulation positioning algorithm or a fingerprint positioning algorithm, to obtain the location information of the terminal.

It can be learned from the description of the present invention provided in the foregoing embodiment that, a positioning server acquires an identifier of a terminal that needs to be positioned; the positioning server acquires, according to the identifier of the terminal, an access point set used for positioning the terminal, where the access point set includes an associated access point accessed by the terminal and a non-associated access point not accessed by the terminal; the positioning server acquires positioning measurement information that is obtained after the access point set interacts with the terminal; and the positioning server acquires location information of the terminal according to the positioning measurement information, and sends the location information of the terminal to an application server. In terminal positioning of the present invention, after a positioning server acquires a terminal that needs to be positioned, the positioning server acquires, according to an identifier of the terminal, an access point set that can be used to perform positioning measurement on the terminal, and the access point set acquires positioning measurement information of the terminal through interaction with the terminal. Therefore, it can be avoided that the access point blindly waits for uplink information of the terminal; positioning efficiency is improved, and impact on each access point is small. Moreover, no specific application program needs to be implanted in a single terminal in the present invention, which is compatible with all terminals.

Referring to FIG. 8, FIG. 8 is an access point according to an embodiment of the present invention. The access point is specifically an associated access point accessed by a terminal that needs to be positioned. The associated access point 800 may include: a receiving module 801, a measurement information acquiring module 802, and a sending module 803.

The receiving module 801 is configured to receive a positioning request message sent by a positioning server, where the positioning request message includes an identifier of the terminal that needs to be positioned, and the associated access point belongs to an access point set that is acquired by the positioning server according to the identifier of the terminal.

The measurement information acquiring module 802 is configured to interact with the terminal according to the positioning request message, and acquire positioning measurement information of the terminal.

The sending module 803 is configured to send the positioning measurement information to the positioning server.

In some embodiments of the present invention, if the positioning request message further includes: a collaboration time acquired by the positioning server, where the collaboration time is used to allow the associated access point and a non-associated access point that is in the access point set to acquire positioning measurement information of the terminal in a collaborative manner after the collaboration time arrives,
the measurement information acquiring module 802 is specifically configured to interact with the terminal according to the positioning request message after the collaboration time arrives, to obtain the positioning measurement information of the terminal.

In some embodiments of the present invention, the measurement information acquiring module 802 is specifically configured to send a positioning packet to the terminal according to the positioning request message; receive a positioning response packet sent by the terminal; and generate the positioning measurement message according to the received positioning response packet.

It can be learned from the description of the present invention provided in the foregoing embodiment that, an associated access point first receives a positioning request message sent by a positioning server; then the associated access point interacts with a terminal according to the positioning request message, to obtain positioning measurement information of the terminal; and finally, the associated access point sends the positioning measurement information to the positioning server. In the present invention, terminal positioning performed by the associated access point is triggered by the positioning server, and the associated access point proactively interacts with the terminal that needs to be positioned, to obtain the positioning measurement information of the terminal. Therefore, it can be avoided that the associated access point blindly waits for uplink information of the terminal; positioning efficiency is improved, and impact on the associated access point is small. Moreover, no specific application program needs to be implanted in a single terminal in the present invention, which is compatible with all terminals.

Referring to FIG. 9-a, FIG. 9-a is an access point according to an example. The access point is specifically a non-associated access point 900 not accessed by a terminal that needs to be positioned. The non-associated access point 900 includes at least an access point whose coverage area covers the terminal. The non-associated access point 900 may include: a receiving module 901, a measurement information acquiring module 902, and a sending module 903.

The receiving module 901 is configured to receive a positioning request message sent by a positioning server, where the positioning request message includes an identifier of the terminal that needs to be positioned, the non-associated access point belongs to an access point set that is acquired by the positioning server according to the identifier of the terminal, the terminal does not access the non-associated access point, and the non-associated access point includes at least an access point whose coverage area covers the terminal.

The measurement information acquiring module 902 is configured to switch to an operating channel of the terminal, and acquire positioning measurement information of the terminal.

The sending module 903 is configured to send the positioning measurement information to the positioning server.

In an example, if the positioning request message further includes: a collaboration time acquired by the positioning server, where the collaboration time is used to allow the non-associated access point to switch to an operating channel of the terminal after the collaboration time arrives,
the measurement information acquiring module 902 is specifically configured to switch to the operating channel of the terminal when the collaboration time arrives, listen on the operating channel, and if the terminal sends a positioning response packet on the operating channel according to a positioning packet sent by the associated access point, receive the positioning response packet; and generate the positioning measurement message according to the received positioning response packet.

In an example, the measurement information acquiring module 902 is specifically configured to: after switching to the operating channel of the terminal, send a positioning packet to the terminal according to the positioning request message; receive the positioning response packet sent by the terminal; and generate the positioning measurement message according to the received positioning response packet.

In an example, the measurement information acquiring module 902 is specifically configured to send the positioning packet to the terminal by using an identity of an associated access point accessed by the terminal.

In an example, the sending module 903 is further configured to: before the measurement information acquiring module 902 switches the non-associated access point to the operating channel of the terminal and acquires the positioning measurement information of the terminal, before the non-associated access point switches to the operating channel of the terminal, send a packet delivery stopping instruction to a terminal associated with the non-associated access point, so that the terminal associated with the non-associated access point temporarily stops sending an uplink packet to the non-associated access point;
and/or
referring to FIG. 9-b, the non-associated access point 900 further includes a buffering module 904, configured to: before the measurement information acquiring module 902 switches the non-associated access point to the operating channel of the terminal and acquires the positioning measurement information of the terminal, before the non-associated access point switches to the operating channel of the terminal, buffer a downlink packet that is in the non-associated access point and that has not been sent.

In an example, referring to FIG. 9-c, the non-associated access point 900 further includes a channel switchback module 905, configured to: after the measurement information acquiring module 903 switches the non-associated access point to the operating channel of the terminal and acquires the positioning measurement information of the terminal, switch the non-associated access point back to an operating channel on which the non-associated access point stays before the non-associated access point switches to the operating channel of the terminal.

It can be learned from the foregoing examples that, a non-associated access point first receives a positioning request message sent by a positioning server; then the non-associated access point switches to an operating channel of a terminal and acquires positioning measurement information of the terminal; and finally, the non-associated access point sends the positioning measurement information to the positioning server. In the present example, terminal positioning performed by the non-associated access point is triggered by the positioning server, and the non-associated access point interacts with the terminal that needs to be positioned, to obtain the positioning measurement information of the terminal. Therefore, it can be avoided that the non-associated access point blindly waits for uplink information of the terminal; positioning efficiency is improved, and impact on the non-associated access point is small. Moreover, no specific application program needs to be implanted in a single terminal in the present example, which is compatible with all terminals.

Referring to FIG. 10, a terminal device positioning system 1000 provided in an embodiment of the present invention may include: the positioning server 700 according to any item of FIG. 7, the associated access point 800 according to any item of FIG. 8, and the non-associated access point 900 according to any one of FIG. 9-a, FIG. 9-b, and FIG. 9-c.

It can be learned from the description of the present invention provided in the foregoing embodiment that, a positioning server acquires an identifier of a terminal that needs to be positioned; the positioning server acquires, according to the identifier of the terminal, an access point set used for positioning the terminal, where the access point set includes an associated access point accessed by the terminal and a non-associated access point not accessed by the terminal; the positioning server acquires positioning measurement information that is obtained after the access point set interacts with the terminal; and the positioning server acquires location information of the terminal according to the positioning measurement information, and sends the location information of the terminal to an application server. In terminal positioning of the present invention, after a positioning server acquires a terminal that needs to be positioned, the positioning server acquires, according to an identifier of the terminal, an access point set that can be used to perform positioning measurement on the terminal, and the access point set acquires positioning measurement information of the terminal through interaction with the terminal. Therefore, it can be avoided that an access point blindly waits for uplink information of the terminal; positioning efficiency is improved, and impact on each access point is small. Moreover, no specific application program needs to be implanted in a single terminal in the present invention, which is compatible with all terminals.

It should be noted that, content such as interactions between modules/units of the foregoing apparatus and execution processes is based on the same thinking as the method embodiments of the present invention, and achieves technical effects the same as those of the method embodiments of the present invention. For specific content, reference may be made to the descriptions in the foregoing method embodiments of the present invention, and details are not described herein again.

An embodiment of the present invention further provides a computer storage medium, where the computer storage medium may have a program stored therein, and execution of the program includes some or all of the steps described in the foregoing method embodiments.

Next, another positioning server provided in an embodiment of the present invention is described. Referring to FIG. 11, a positioning server 1100 includes:
an input apparatus 1101, an output apparatus 1102, a processor 1103, and a memory 1104 (where the positioning server 1100 may include one or more processors 1103, and one processor is used as an example in FIG. 11), where in some embodiments of the present invention, the input apparatus 1101, the output apparatus 1102, the processor 1103, and the memory 1104 may be connected by using a bus or in another manner, and connection by using a bus is used as an example in FIG. 11.

The processor 1103 is configured to perform the following steps:
acquiring an identifier of a terminal that needs to be positioned;
acquiring, according to the identifier of the terminal, an access point set used for positioning the terminal, where the access point set includes an associated access point accessed by the terminal and a non-associated access point not accessed by the terminal, and the non-associated access point includes at least an access point whose coverage area covers the terminal;
acquiring positioning measurement information that is obtained after the access point set interacts with the terminal; and
acquiring location information of the terminal according to the positioning measurement information, and sending the location information of the terminal to the application server.

In some embodiments of the present invention, the processor 1103 is specifically configured to perform the following steps:
sending a positioning request message separately to the associated access point and the non-associated access point simultaneously, where the positioning request message includes the identifier of the terminal and a collaboration time, and the collaboration time is used to allow the associated access point and the non-associated access point to acquire positioning measurement information of the terminal in a collaborative manner after the collaboration time arrives; and
receiving the positioning measurement information that is obtained from the terminal by the associated access point and the non-associated access point according to the collaboration time.

In some embodiments of the present invention, the processor 1103 is specifically configured to perform the following steps:
sending a positioning request message separately to the associated access point and the non-associated access point, where the positioning request message includes the identifier of the terminal; and
receiving positioning measurement information obtained from the terminal by the associated access point, and receiving positioning measurement information obtained from the terminal by the non-associated access point.

In some embodiments of the present invention, the processor 1103 is specifically configured to perform the following steps:
receiving a location acquiring message sent by an application server, where the location acquiring message includes an identifier of a terminal whose location information needs to be acquired by the application server; and
after acquiring location information of the terminal according to the positioning measurement information, the processor 1103 is further configured to perform the following step:
   sending the location information of the terminal to the application server.

In some embodiments of the present invention, the processor 1103 is specifically configured to perform the following step:
performing calculation on the positioning measurement information by using a triangulation positioning algorithm or a fingerprint positioning algorithm, to obtain the location information of the terminal.

It can be learned from the description of the present invention provided in the foregoing embodiment that, a positioning server may acquire an identifier of a terminal that needs to be positioned; the positioning server acquires, according to the identifier of the terminal, an access point set used for positioning the terminal, where the access point set includes an associated access point accessed by the terminal and a non-associated access point not accessed by the terminal; the positioning server acquires positioning measurement information that is obtained after the access point set interacts with the terminal; and the positioning server acquires location information of the terminal according to the positioning measurement information. In terminal positioning of the present invention, after a positioning server acquires a terminal that needs to be positioned, the positioning server acquires, according to an identifier of the terminal, an access point set that can be used to perform positioning measurement on the terminal, and the access point set acquires positioning measurement information of the terminal through interaction with the terminal. Therefore, it can be avoided that an access point blindly waits for uplink information of the terminal; positioning efficiency is improved, and impact on each access point is small. Moreover, no specific application program needs to be implanted in a single terminal in the present invention, which is compatible with all terminals.

Next, another associated access point provided in an embodiment of the present invention is described. Referring to FIG. 12, an associated access point 1200 includes:
an input apparatus 1201, an output apparatus 1202, a processor 1203, and a memory 1204 (where the associated access point 1200 may include one or more processors 1203, and one processor is used as an example in FIG. 12), where in some embodiments of the present invention, the input apparatus 1201, the output apparatus 1202, the processor 1203, and the memory 1204 may be connected by using a bus or in another manner, and connection by using a bus is used as an example in FIG. 12.

The processor 1203 is configured to perform the following steps:
receiving a positioning request message sent by a positioning server, where the positioning request message includes an identifier of a terminal that needs to be positioned, and the associated access point belongs to an access point set that is acquired by the positioning server according to the identifier of the terminal;
interacting with the terminal according to the positioning request message, to obtain positioning measurement information of the terminal; and
sending the positioning measurement information to the positioning server.

In some embodiments of the present invention, the processor 1203 is specifically configured to perform the following step: if the positioning request message further includes: a collaboration time acquired by the positioning server, where the collaboration time is used to allow the associated access point and a non-associated access point that is in the access point set to acquire positioning measurement information of the terminal in a collaborative manner after the collaboration time arrives,
interacting with the terminal according to the positioning request message after the collaboration time arrives, to obtain the positioning measurement information of the terminal.

In some embodiments of the present invention, the processor 1203 is specifically configured to perform the following steps:
sending a positioning packet to the terminal according to the positioning request message;
receiving a positioning response packet sent by the terminal; and
generating the positioning measurement message according to the received positioning response packet.

It can be learned from the description of the present invention provided in the foregoing embodiment that, an associated access point first receives a positioning request message sent by a positioning server; then the associated access point interacts with a terminal according to the positioning request message, to obtain positioning measurement information of the terminal; and finally, the associated access point sends the positioning measurement information to the positioning server. In the present invention, terminal positioning performed by the associated access point is triggered by the positioning server, and the associated access point proactively interacts with the terminal that needs to be positioned, to obtain the positioning measurement information of the terminal. Therefore, it can be avoided that the associated access point blindly waits for uplink information of the terminal; positioning efficiency is improved, and impact on the associated access point is small. Moreover, no specific application program needs to be implanted in a single terminal in the present invention, which is compatible with all terminals.

Next, another non-associated access point provided in an example is described. Referring to FIG. 13, a non-associated access point 1300 includes:
an input apparatus 1301, an output apparatus 1302, a processor 1303, and a memory 1304 (where the non-associated access point 1300 may include one or more processors 1303, and one processor is used as an example in FIG. 13), where in an example, the input apparatus 1301, the output apparatus 1302, the processor 1303, and the memory 1304 may be connected by using a bus or in another manner, and connection by using a bus is used as an example in FIG. 13.

The processor 1303 is configured to perform the following steps:
receiving a positioning request message sent by a positioning server, where the positioning request message includes an identifier of a terminal that needs to be positioned, the non-associated access point belongs to an access point set that is acquired by the positioning server according to the identifier of the terminal, the terminal does not access the non-associated access point, and the non-associated access point includes at least an access point whose coverage area covers the terminal;
switching to an operating channel of the terminal, and acquiring positioning measurement information of the terminal; and
sending the positioning measurement information to the positioning server.

In an example, the processor 1303 is specifically configured to perform the following steps: if the positioning request message further includes: a collaboration time acquired by the positioning server, where the collaboration time is used to allow the non-associated access point to switch to an operating channel of the terminal after the collaboration time arrives,
switching to the operating channel of the terminal when the collaboration time arrives, listening on the operating channel, and if the terminal sends a positioning response packet on the operating channel according to a positioning packet sent by the associated access point, receiving the positioning response packet; and
generating the positioning measurement message according to the received positioning response packet.

In an example, the processor 1303 is specifically configured to perform the following steps:
after switching to the operating channel of the terminal, sending a positioning packet according to the positioning request message;
receiving a positioning response packet sent by the terminal; and
generating the positioning measurement message according to the received positioning response packet.

In an example, the processor 1303 is specifically configured to perform the following step:
sending a positioning packet to the terminal by using an identity of an associated access point accessed by the terminal.

In an example, the processor 1303 is further configured to perform the following steps: before the switching to an operating channel of the terminal, and acquiring positioning measurement information of the terminal, before the non-associated access point switches to the operating channel of the terminal, sending a packet delivery stopping instruction to a terminal associated with the non-associated access point, so that the terminal associated with the non-associated access point temporarily stops sending an uplink packet to the non-associated access point; and/or before the non-associated access point switches to the operating channel of the terminal, buffering a downlink packet that is in the non-associated access point and that has not been sent.

In an example, the processor 1303 is further configured to perform the following step: after the switching to an operating channel of the terminal, and acquiring positioning measurement information of the terminal, switching back to an operating channel on which the non-associated access point stays before the non-associated access point switches to the operating channel of the terminal.

It can be learned from the foregoing examples that, a non-associated access point first receives a positioning request message sent by a positioning server; then the non-associated access point switches to an operating channel of a terminal and acquires positioning measurement information of the terminal; and finally, the non-associated access point sends the positioning measurement information to the positioning server. In the present example, terminal positioning performed by the non-associated access point is triggered by the positioning server, and the non-associated access point interacts with the terminal that needs to be positioned, to obtain the positioning measurement information of the terminal. Therefore, it can be avoided that the non-associated access point blindly waits for uplink information of the terminal; positioning efficiency is improved, and impact on the non-associated access point is small. Moreover, no specific application program needs to be implanted in a single terminal in the present example, which is compatible with all terminals.

In addition, it should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided in the present invention, connection relationships between modules indicate that the modules have communication connections with each other, which may be specifically implemented as one or more communications buses or signal cables. Persons of ordinary skill in the art may understand and implement the embodiments of the present invention without creative efforts.

Based on the description of the foregoing implementation manners, persons skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof.

## Claims

1. A terminal device positioning method, wherein the method is applied in a wireless local area network, and comprises:
receiving (S03, P03), by a positioning server, a location acquiring message sent by an application server, wherein the location acquiring message comprises an identifier of a terminal whose location information needs to be acquired by the application server;
acquiring (202, S04, P04), by the positioning server according to the identifier of the terminal, an access point set used for positioning the terminal, wherein the access point set comprises an associated access point accessed by the terminal and a non-associated access point not accessed by the terminal, and the non-associated access point comprises at least an access point whose coverage area covers the terminal;
acquiring (203, S05a, S05b, S10, S11, P05, P09, P08, P14), by the positioning server from the access point set, positioning measurement information that is obtained after the access point set interacts with the terminal, wherein through the interaction with the terminal, the access point set acquires the positioning measurement information; and
acquiring (204, S12, P15), by the positioning server, location information of the terminal according to the positioning measurement information;
after the acquiring (204, S12, P15), by the positioning server, location information of the terminal according to the positioning measurement information, sending (S13, P16), by the positioning server, the location information of the terminal to the application server.

2. The method according to claim 1, wherein the acquiring (203, S05a, S05b, S10, S11, P05, P09, P08, P14), by the positioning server, positioning measurement information that is obtained after the access point set interacts with the terminal comprises:
sending (S05a, S05b), by the positioning server, a positioning request message separately to the associated access point and the non-associated access point , wherein the positioning request message comprises the identifier of the terminal and a collaboration time, and the collaboration time is used to allow the associated access point and the non-associated access point to acquire positioning measurement information of the terminal in a collaborative manner after the collaboration time arrives; and
receiving (S10, S11), by the positioning server, the positioning measurement information that is obtained from the terminal by the associated access point and the non-associated access point according to the collaboration time.

3. The method according to claim 1, wherein the acquiring (203, S05a, S05b, S10, S11, P05, P09, P08, P14), by the positioning server, positioning measurement information that is obtained after the access point set interacts with the terminal comprises:
sending (S05a, S05b, P05, P09), by the positioning server, a positioning request message separately to the associated access point and the non-associated access point, wherein the positioning request message comprises the identifier of the terminal; and
receiving (S10, S11, P08, P14), by the positioning server, positioning measurement information obtained from the terminal by the associated access point, and receiving positioning measurement information obtained from the terminal by the non-associated access point.

4. A terminal device positioning method, wherein the method is applied in a wireless local area network, and comprises:
receiving (301, S05b, P05), by an associated access point, a positioning request message sent by a positioning server, wherein the positioning request message comprises an identifier of a terminal whose location information needs to be acquired by an application server, the identifier of the terminal is obtained by the positioning server through a location acquiring message sent by an application server to the positioning server, and the associated access point belongs to an access point set that is acquired by the positioning server according to the identifier of the terminal;
interacting (302, S07, S08, P06, P07), by the associated access point, with the terminal according to the positioning request message, to obtain positioning measurement information of the terminal; and
sending (303, S10, P08), by the associated access point, the positioning measurement information to the positioning server.

5. The method according to claim 4, wherein the interacting (302, S07, S08, P06, P07), by the associated access point, with the terminal according to the positioning request message, to obtain positioning measurement information of the terminal comprises:
sending (S07, P06), by the associated access point, a positioning packet to the terminal according to the positioning request message;
receiving (S08, P07), by the associated access point, a positioning response packet sent by the terminal; and
generating, by the associated access point, the positioning measurement information according to the received positioning response packet.

6. The method according to claim 4 or 5, wherein if the positioning request message further comprises: a collaboration time acquired by the positioning server, wherein the collaboration time is used to allow the associated access point and a non-associated access point that is in the access point set to acquire positioning measurement information of the terminal in a collaborative manner after the collaboration time arrives,
the interacting (302, S07, S08, P06, P07), by the associated access point, with the terminal according to the positioning request message, to obtain positioning measurement information of the terminal comprises:
interacting (S07, S08), by the associated access point, with the terminal according to the positioning request message after the collaboration time arrives, to obtain the positioning measurement information of the terminal.

7. A positioning server (700), comprising:
a positioning determining module (701), configured to receive a location acquiring message sent by an application server, wherein the location acquiring message comprises an identifier of a terminal whose location information needs to be acquired by the application server;
an access point acquiring module (702), configured to acquire, according to the identifier of the terminal, an access point set used for positioning the terminal, wherein the access point set comprises an associated access point accessed by the terminal and a non-associated access point not accessed by the terminal, and the non-associated access point comprises at least an access point whose coverage area covers the terminal;
a measurement information acquiring module (703), configured to acquire, from the access point set, positioning measurement information that is obtained after the access point set interacts with the terminal, wherein through the interaction with the terminal, the access point set acquires the positioning measurement information; and
a location information acquiring module (704), configured to acquire location information of the terminal according to the positioning measurement information and send the location information of the terminal to the application server.

8. The positioning server according to claim 7, wherein the measurement information acquiring module (703) is specifically configured to send a positioning request message separately to the associated access point and the non-associated access point simultaneously, wherein the positioning request message comprises the identifier of the terminal and a collaboration time, and the collaboration time is used to allow the associated access point and the non-associated access point to acquire positioning measurement information of the terminal in a collaborative manner after the collaboration time arrives; and receive the positioning measurement information that is obtained from the terminal by the associated access point and the non-associated access point according to the collaboration time.

9. The positioning server according to claim 7, wherein the measurement information acquiring module (703) is specifically configured to send a positioning request message separately to the associated access point and the non-associated access point, wherein the positioning request message comprises the identifier of the terminal; and receive positioning measurement information obtained from the terminal by the associated access point, and receive positioning measurement information obtained from the terminal by the non-associated access point.

10. An access point (800), wherein the access point is specifically an associated access point accessed by a terminal that needs to be positioned, and the associated access point comprises:
a receiving module (801), configured to receive a positioning request message sent by a positioning server, wherein the positioning request message comprises an identifier of the terminal whose location information needs to be acquired by an application server, the identifier of the terminal is obtained by the positioning server through a location acquiring message sent by an application server to the positioning server, and the associated access point belongs to an access point set that is acquired by the positioning server according to the identifier of the terminal;
a measurement information acquiring module (802), configured to interact with the terminal according to the positioning request message, to obtain positioning measurement information of the terminal; and
a sending module (803), configured to send the positioning measurement information to the positioning server.

11. The access point according to claim 10, wherein the measurement information acquiring module (802) is specifically configured to send a positioning packet to the terminal according to the positioning request message; receive a positioning response packet sent by the terminal; and generate the positioning measurement information according to the received positioning response packet.

12. A computer-readable storage medium comprising instructions which, when executed by a computer, cause the computer to carry out the method of any of claims 1 to 6.

13. A computer program which makes a computer to execute the method of any of claims 1 to 6.

## Patentansprüche

1. Verfahren zur Positionsbestimmung einer Endgerätvorrichtung, wobei das Verfahren in einem drahtlosen lokalen Netzwerk (WLAN, Wireless Local Area Network) angewendet wird und umfasst:
Empfangen (S03, P03), durch einen Positionsbestimmungsserver, einer durch einen Anwendungsserver gesendeten Standorterfassungsnachricht, wobei die Standorterfassungsnachricht eine Kennung eines Endgeräts umfasst, dessen Standortinformation durch den Anwendungsserver erfasst werden muss;
Erfassen (202, S04, P04), durch den Positionsbestimmungsserver gemäß der Kennung des Endgeräts, eines Zugriffspunktsatzes, der zur Positionsbestimmung des Endgeräts verwendet wird, wobei der Zugriffspunktsatz einen zugeordneten Zugriffspunkt, auf den durch das Endgerät zugegriffen wird, und einen nicht zugeordneten Zugriffspunkt, auf den nicht durch das Endgerät zugegriffen wird, umfasst, und der nicht zugeordnete Zugriffspunkt mindestens einen Zugriffspunkt umfasst, dessen Abdeckungsbereich das Endgerät abdeckt;
Erfassen (203, S05a, S05b, S10, S11, P05, P09, P08, P14), durch den Positionsbestimmungsserver von dem Zugriffspunktsatz, einer Positionsbestimmungsmessinformation, die erhalten wird, nachdem der Zugriffspunktsatz mit dem Endgerät interagiert, wobei über die Interaktion mit dem Endgerät der Zugriffspunktsatz die Positionsbestimmungsmessinformation erhält; und
Erfassen (204, S12, P15), durch den Positionsbestimmungsserver, einer Standortinformation des Endgeräts gemäß der Positionsbestimmungsmessinformation;
nach dem Erfassen (204, S12, P15), durch den Positionsbestimmungsserver, einer Standortinformation des Endgeräts gemäß der Positionsbestimmungsmessinformation, Senden (S13, P16), durch den Positionsbestimmungsserver, der Standortinformation des Endgeräts an den Anwendungsserver.

2. Verfahren nach Anspruch 1, wobei das Erfassen (203, S05a, S05b, S10, S11, P05, P09, P08, P14), durch den Positionsbestimmungsserver, einer Positionsbestimmungsmessinformation, die erhalten wird, nachdem der Zugriffspunktsatz mit dem Endgerät interagiert, umfasst:
Senden (S05a, S05b), durch den Positionsbestimmungsserver, einer Positionsbestimmungsanforderungsnachricht separat an den zugeordneten Zugriffspunkt und den nicht zugeordneten Zugriffspunkt, wobei die Positionsbestimmungsanforderungsnachricht die Kennung des Endgeräts und eine Kollaborationszeit umfasst, und die Kollaborationszeit verwendet wird, um dem zugeordneten Zugriffspunkt und dem nicht zugeordneten Zugriffspunkt zu erlauben, eine Positionsbestimmungsmessinformation des Endgeräts auf eine kollaborative Weise zu erfassen, nachdem die Kollaborationszeit eintritt; und
Empfangen (S10, S11), durch den Positionsbestimmungsserver, der Positionsbestimmungsmessinformation, die von dem Endgerät durch den zugeordneten Zugriffspunkt und den nicht zugeordneten Zugriffspunkt gemäß der Kollaborationszeit erhalten wurde.

3. Verfahren nach Anspruch 1, wobei das Erfassen (203, S05a, S05b, S10, S11, P05, P09, P08, P14), durch den Positionsbestimmungsserver, einer Positionsbestimmungsmessinformation, die erhalten wird, nachdem der Zugriffspunktsatz mit dem Endgerät interagiert, umfasst:
Senden (S05a, S05b, P05, P09), durch den Positionsbestimmungsserver, einer Positionsbestimmungsanforderungsnachricht separat an den zugeordneten Zugriffspunkt und den nicht zugeordneten Zugriffspunkt, wobei die Positionsbestimmungsanforderungsnachricht die Kennung des Endgeräts umfasst; und
Empfangen (S10, S11, P08, P14), durch den Positionsbestimmungsserver, einer Positionsbestimmungsmessinformation, die von dem Endgerät durch den zugeordneten Zugriffspunkt erhalten wird, und Empfangen einer Positionsbestimmungsmessinformation, die von dem Endgerät durch den nicht zugeordneten Zugriffspunkt erhalten wird.

4. Verfahren zur Positionsbestimmung einer Endgerätvorrichtung, wobei das Verfahren in einem drahtlosen lokalen Netzwerk (WLAN, Wireless Local Area Network) angewendet wird und umfasst:
Empfangen (301, S05b, P05), durch einen zugeordneten Zugriffspunkt, einer durch einen Positionsbestimmungsserver gesendeten Positionsbestimmungsanforderungsnachricht, wobei die Positionsbestimmungsanforderungsnachricht eine Kennung eines Endgeräts umfasst, dessen Standortinformation durch einen Anwendungsserver erfasst werden muss, wobei die Kennung des Endgeräts durch den Positionsbestimmungsserver über eine Standorterfassungsnachricht erhalten wird, die durch einen Anwendungsserver an den Positionsbestimmungsserver gesendet wird, und der zugeordnete Zugriffspunkt zu einem Zugriffspunktsatz gehört, der durch den Positionsbestimmungsserver gemäß der Kennung des Endgeräts erfasst wird;
Interagieren (302, S07, S08, P06, P07), durch den zugeordneten Zugriffspunkt, mit dem Endgerät gemäß der Positionsbestimmungsanforderungsnachricht, um eine Positionsbestimmungsmessinformation des Endgeräts zu erhalten; und
Senden (303, S10, P08), durch den zugeordneten Zugriffspunkt, der Positionsbestimmungsmessinformation an den Positionsbestimmungsserver.

5. Verfahren nach Anspruch 4, wobei das Interagieren (302, S07, S08, P06, P07), durch den zugeordneten Zugriffspunkt, mit dem Endgerät gemäß der Positionsbestimmungsanforderungsnachricht, um eine Positionsbestimmungsmessinformation des Endgeräts zu erhalten, umfasst:
Senden (S07, P06), durch den zugeordneten Zugriffspunkt, eines Positionsbestimmungspakets an das Endgerät gemäß der Positionsbestimmungsanforderungsnachricht;
Empfangen (S08, P07), durch den zugeordneten Zugriffspunkt, eines durch das Endgerät gesendeten Positionsbestimmungsantwortpakets; und
Erzeugen, durch den zugeordneten Zugriffspunkt, der Positionsbestimmungsmessinformation gemäß dem empfangenen Positionsbestimmungsantwortpaket.

6. Verfahren nach Anspruch 4 oder 5, wobei, wenn die Positionsbestimmungsanforderungsnachricht ferner umfasst: eine durch den Positionsbestimmungsserver erfasste Kollaborationszeit, wobei die Kollaborationszeit verwendet wird, um dem zugeordneten Zugriffspunkt und einem nicht zugeordneten Zugriffspunkt, der sich in dem Zugriffspunksatz befindet, zu erlauben, eine Positionsbestimmungsmessinformation des Endgeräts auf eine kollaborative Weise zu erfassen, nachdem die Kollaborationszeit eintritt,
das Interagieren (302, S07, S08, P06, P07), durch den zugeordneten Zugriffspunkt, mit dem Endgerät gemäß der Positionsbestimmungsanforderungsnachricht, um eine Positionsbestimmungsmessinformation des Endgeräts zu erhalten, umfasst:
Interagieren (S07, S08), durch den zugeordneten Zugriffspunkt, mit dem Endgerät gemäß der Positionsbestimmungsanforderungsnachricht, nachdem die Kollaborationszeit eintritt, um die Positionsbestimmungsmessinformation des Endgeräts zu erhalten.

7. Positionsbestimmungsserver (700), umfassend:
ein Positionsbestimmungsmodul (701), das ausgestaltet ist, eine durch einen Anwendungsserver gesendete Standorterfassungsnachricht zu empfangen, wobei die Standorterfassungsnachricht eine Kennung eines Endgeräts umfasst, dessen Standortinformation durch den Anwendungsserver erfasst werden muss;
ein Zugangspunkterfassungsmodul (702), das ausgestaltet ist, gemäß der Kennung des Endgeräts einen Zugangspunktsatz zu erfassen, der für eine Positionsbestimmung des Endgeräts verwendet wird, wobei der Zugriffspunktsatz einen zugeordneten Zugriffspunkt, auf den durch das Endgerät zugegriffen wird, und einen nicht zugeordneten Zugriffspunkt, auf den nicht durch das Endgerät zugegriffen wird, umfasst, und der nicht zugeordnete Zugriffspunkt mindestens einen Zugriffspunkt umfasst, dessen Abdeckungsbereich das Endgerät abdeckt;
ein Messinformationserfassungsmodul (703), das ausgestaltet ist, von dem Zugriffspunktsatz eine Positionsbestimmungsmessinformation zu erfassen, die erhalten wird, nachdem der Zugriffspunktsatz mit dem Endgerät interagiert, wobei über die Interaktion mit dem Endgerät der Zugriffspunktsatz die Positionsbestimmungsmessinformation erhält; und
ein Standortinformationserfassungsmodul (704), das ausgestaltet ist, eine Standortinformation des Endgeräts gemäß der Positionsbestimmungsmessinformation zu erfassen und die Standortinformation des Endgeräts an den Anwendungsserver zu senden.

8. Positionsbestimmungsserver nach Anspruch 7, wobei das Messinformationserfassungsmodul (703) insbesondere ausgestaltet ist, eine Positionsbestimmungsanforderungsnachricht separat gleichzeitig an den zugeordneten Zugriffspunkt und den nicht zugeordneten Zugriffspunkt zu senden, wobei die Positionsbestimmungsanforderungsnachricht die Kennung des Endgeräts und eine Kollaborationszeit umfasst, und die Kollaborationszeit verwendet wird, um dem zugeordneten Zugriffspunkt und dem nicht zugeordneten Zugriffspunkt zu erlauben, eine Positionsbestimmungsmessinformation des Endgeräts auf eine kollaborative Weise zu erfassen, nachdem die Kollaborationszeit eintritt; und die Positionsbestimmungsmessinformation zu empfangen, die von dem Endgerät durch den zugeordneten Zugriffspunkt und den nicht zugeordneten Zugriffspunkt gemäß der Kollaborationszeit erhalten wurde.

9. Positionsbestimmungsserver nach Anspruch 7, wobei das Messinformationserfassungsmodul (703) insbesondere ausgestaltet ist, eine Positionsbestimmungsanforderungsnachricht separat an den zugeordneten Zugriffspunkt und den nicht zugeordneten Zugriffspunkt zu senden, wobei die Positionsbestimmungsanforderungsnachricht die Kennung des Endgeräts umfasst; und eine Positionsbestimmungsmessinformation zu empfangen, die von dem Endgerät durch den zugeordneten Zugriffspunkt erhalten wird, und eine Positionsbestimmungsmessinformation zu empfangen, die von dem Endgerät durch den nicht zugeordneten Zugriffspunkt erhalten wird.

10. Zugriffspunkt (800), wobei der Zugriffspunkt insbesondere ein zugeordneter Zugriffspunkt ist, auf den durch ein Endgerät zugegriffen wird, dessen Position bestimmt werden muss, und der zugeordnete Zugriffspunkt umfasst:
ein Empfangsmodul (801), das ausgestaltet ist, eine durch einen Positionsbestimmungsserver gesendete Positionsbestimmungsanforderungsnachricht zu empfangen, wobei die Positionsbestimmungsanforderungsnachricht eine Kennung des Endgeräts umfasst, dessen Standortinformation durch einen Anwendungsserver erfasst werden muss, wobei die Kennung des Endgeräts durch den Positionsbestimmungsserver über eine Standorterfassungsnachricht erhalten wird, die durch einen Anwendungsserver an den Positionsbestimmungsserver gesendet wird, und der zugeordnete Zugriffspunkt zu einem Zugriffspunktsatz gehört, der durch den Positionsbestimmungsserver gemäß der Kennung des Endgeräts erfasst wird;
ein Messinformationserfassungsmodul (802), das ausgestaltet ist, mit dem Endgerät gemäß der Positionsbestimmungsanforderungsnachricht zu interagieren, um eine Positionsbestimmungsmessinformation des Endgeräts zu erhalten; und
ein Sendemodul (803), das ausgestaltet ist, die Positionsbestimmungsmessinformation an den Positionsbestimmungsserver zu senden.

11. Zugriffspunkt nach Anspruch 10, wobei das Messinformationserfassungsmodul (802) insbesondere ausgestaltet ist, ein Positionsbestimmungspakets an das Endgerät gemäß der Positionsbestimmungsanforderungsnachricht zu senden; ein durch das Endgerät gesendetes Positionsbestimmungsantwortpaket zu empfangen; und die Positionsbestimmungsmessinformation gemäß dem empfangenen Positionsbestimmungsantwortpaket zu erzeugen.

12. Computerlesbares Speichermedium umfassend Anweisungen, die, wenn sie durch einen Computer ausgeführt werden, den Computer veranlassen, das Verfahren nach einem der Ansprüche 1 bis 6 durchzuführen.

13. Computerprogramm, das einen Computer veranlasst, das Verfahren nach einem der Ansprüche 1 bis 6 auszuführen.

## Revendications

1. Procédé de positionnement d'un dispositif terminal, le procédé étant appliqué dans un réseau local sans fil, et comprenant :
la réception (S03, P03), par un serveur de positionnement, d'un message d'acquisition de localisation envoyé par un serveur d'application, le message d'acquisition de localisation comprenant un identifiant d'un terminal dont les informations de localisation doivent être acquises par le serveur d'application ;
l'acquisition (202, S04, P04), par le serveur de positionnement en fonction de l'identifiant du terminal, d'un ensemble de points d'accès utilisé pour positionner le terminal, l'ensemble de points d'accès comprenant un point d'accès associé accédé par le terminal et un point d'accès non associé non accédé par le terminal, et le point d'accès non associé comprenant au moins un point d'accès dont la zone de couverture couvre le terminal ;
l'acquisition (203, S05a, S05b, S10, S11, P05, P09, P08, P14), par le serveur de positionnement à partir de l'ensemble de points d'accès, des informations de mesure de positionnement qui sont obtenues après que l'ensemble de points d'accès a interagi avec le terminal, l'ensemble de points d'accès faisant l'acquisition, par interaction avec le terminal, des informations de mesure de positionnement ; et
l'acquisition (204, S12, P15), par le serveur de positionnement, d'informations de localisation du terminal en fonction des informations de mesure de positionnement ;
après l'acquisition (204, S12, P15), par le serveur de positionnement, des informations de localisation du terminal en fonction des informations de mesure de positionnement, l'envoi (S13, P16), par le serveur de positionnement, des informations de localisation du terminal au serveur d'application.

2. Procédé selon la revendication 1, l'acquisition (203, S05a, S05b, S10, S11, P05, P09, P08, P14), par le serveur de positionnement, d'informations de mesure de positionnement qui sont obtenues après que l'ensemble de points d'accès a interagi avec le terminal comprenant :
l'envoi (S05a, S05b), par le serveur de positionnement, d'un message de demande de positionnement séparément au point d'accès associé et au point d'accès non associé, le message de demande de positionnement comprenant l'identifiant du terminal et un temps de collaboration, et le temps de collaboration étant utilisé pour permettre au point d'accès associé et au point d'accès non associé d'acquérir les informations de mesure de positionnement du terminal, de manière collaborative, après l'arrivée du temps de collaboration ; et
la réception (S10, S11), par le serveur de positionnement, des informations de mesure de positionnement qui sont obtenues du terminal par le point d'accès associé et le point d'accès non associé en fonction du temps de collaboration.

3. Procédé selon la revendication 1, l'acquisition (203, S05a, S05b, S10, S11, P05, P09, P08, P14), par le serveur de positionnement, d'informations de mesure de positionnement qui sont obtenues après que l'ensemble de points d'accès a interagi avec le terminal, comprenant :
l'envoi (S05a, S05b, P05, P09), par le serveur de positionnement, d'un message de demande de positionnement séparément au point d'accès associé et au point d'accès non associé, le message de demande de positionnement comprenant l'identifiant du terminal ; et
la réception (S10, S11, P08, P14), par le serveur de positionnement, des informations de mesure de positionnement obtenues du terminal par le point d'accès associé, et la réception des informations de mesure de positionnement obtenues du terminal par le point d'accès non associé.

4. Procédé de positionnement d'un dispositif terminal, le procédé étant appliqué dans un réseau local sans fil, et comprenant :
la réception (301, S05b, P05), par un point d'accès associé, d'un message de demande de positionnement envoyé par un serveur de positionnement, le message de demande de positionnement comprenant un identifiant d'un terminal dont les informations de localisation doivent être acquises par un serveur d'application, l'identifiant du terminal étant obtenu par le serveur de positionnement via un message d'acquisition de localisation envoyé par un serveur d'application au serveur de positionnement, et le point d'accès associé appartenant à un ensemble de points d'accès qui est acquis par le serveur de positionnement en fonction de l'identifiant du terminal ;
l'interaction (302, S07, S08, P06, P07), par le point d'accès associé, avec le terminal en fonction du message de demande de positionnement, pour obtenir des informations de mesure de positionnement du terminal ; et
l'envoi (303, S10, P08), par le point d'accès associé, des informations de mesure de positionnement au serveur de positionnement.

5. Procédé selon la revendication 4, l'interaction (302, S07, S08, P06, P07), par le point d'accès associé, avec le terminal en fonction du message de demande de positionnement, pour obtenir des informations de mesure de positionnement du terminal, comprenant :
l'envoi (S07, P06), par le point d'accès associé, d'un paquet de positionnement au terminal en fonction du message de demande de positionnement ;
la réception (S08, P07), par le point d'accès associé, d'un paquet de réponse de positionnement envoyé par le terminal ; et
la génération, par le point d'accès associé, des informations de mesure de positionnement en fonction du paquet de réponse de positionnement reçu.

6. Procédé selon la revendication 4 ou 5, dans lequel si le message de demande de positionnement comprend en outre : un temps de collaboration acquis par le serveur de positionnement, le temps de collaboration étant utilisé pour permettre au point d'accès associé et à un point d'accès non associé qui est dans l'ensemble de points d'accès d'acquérir des informations de mesure de positionnement du terminal de manière collaborative après l'arrivée du temps de collaboration,
l'interaction (302, S07, S08, P06, P07), par le point d'accès associé, avec le terminal en fonction du message de demande de positionnement, pour obtenir des informations de mesure de positionnement du terminal comprend :
une interaction (S07, S08), par le point d'accès associé, avec le terminal en fonction du message de demande de positionnement après l'arrivée du temps de collaboration, pour obtenir les informations de mesure de positionnement du terminal.

7. Serveur de positionnement (700), comprenant :
un module de détermination de positionnement (701), configuré pour recevoir un message d'acquisition de localisation envoyé par un serveur d'application, le message d'acquisition de localisation comprenant un identifiant d'un terminal dont les informations de localisation doivent être acquises par le serveur d'application ;
un module d'acquisition de point d'accès (702), configuré pour acquérir, en fonction de l'identifiant du terminal, un ensemble de points d'accès utilisé pour positionner le terminal, l'ensemble de points d'accès comprenant un point d'accès associé accédé par le terminal et un point d'accès non associé non accédé par le terminal, et le point d'accès non associé comprenant au moins un point d'accès dont la zone de couverture couvre le terminal ;
un module d'acquisition d'informations de mesure (703), configuré pour acquérir, à partir de l'ensemble de points d'accès, des informations de mesure de positionnement qui sont obtenues après que l'ensemble de points d'accès a interagi avec le terminal, l'ensemble de points d'accès faisant l'acquisition par l'interaction avec le terminal, des informations de mesure de positionnement ; et
un module d'acquisition d'informations de localisation (704), configuré pour acquérir des informations de localisation du terminal en fonction des informations de mesure de positionnement, et envoyer les informations de localisation du terminal au serveur d'application.

8. Serveur de positionnement selon la revendication 7, le module d'acquisition d'informations de mesure (703) étant configuré spécifiquement pour envoyer un message de demande de positionnement séparément au point d'accès associé et au point d'accès non associé simultanément, le message de demande de positionnement comprenant l'identifiant du terminal et un temps de collaboration, et le temps de collaboration étant utilisé pour permettre au point d'accès associé et au point d'accès non associé d'acquérir les informations de mesure de positionnement du terminal de manière collaborative après l'arrivée du temps de collaboration ; et recevoir les informations de mesure de positionnement qui sont obtenues du terminal par le point d'accès associé et le point d'accès non associé en fonction du temps de collaboration.

9. Serveur de positionnement selon la revendication 7, le module d'acquisition d'informations de mesure (703) étant configuré spécifiquement pour : envoyer un message de demande de positionnement séparément au point d'accès associé et au point d'accès non associé, le message de demande de positionnement comprenant l'identifiant du terminal ; et recevoir des informations de mesure de positionnement obtenues du terminal par le point d'accès associé, et recevoir des informations de mesure de positionnement obtenues du terminal par le point d'accès non associé.

10. Point d'accès (800), le point d'accès étant spécifiquement un point d'accès associé auquel accède un terminal qui doit être positionné, et le point d'accès associé comprenant :
un module de réception (801), configuré pour recevoir un message de demande de positionnement envoyé par un serveur de positionnement, le message de demande de positionnement comprenant un identifiant du terminal dont les informations de localisation doivent être acquises par un serveur de positionnement, l'identifiant du terminal étant obtenu par le serveur de positionnement via un message d'acquisition de localisation envoyé par un serveur d'application au serveur de positionnement, et le point d'accès associé appartenant à un ensemble de points d'accès acquis par le serveur de positionnement en fonction de l'identifiant du terminal ;
un module d'acquisition d'informations de mesure (802), configuré pour interagir avec le terminal en fonction du message de demande de positionnement, pour obtenir des informations de mesure de positionnement du terminal ; et
un module d'envoi (803), configuré pour envoyer les informations de mesure de positionnement au serveur de positionnement.

11. Point d'accès selon la revendication 10, le module d'acquisition d'informations de mesure (802) étant configuré spécifiquement pour envoyer un paquet de positionnement au terminal en fonction du message de demande de positionnement ; recevoir un paquet de réponse de positionnement envoyé par le terminal ; et
générer les informations de mesure de positionnement en fonction du paquet de réponse de positionnement reçu.

12. Support de stockage lisible par ordinateur comprenant des instructions qui, lorsqu'elles sont exécutées par un ordinateur, amènent l'ordinateur à exécuter le procédé selon l'une quelconque des revendications 1 à 6.

13. Programme informatique qui amène un ordinateur à exécuter le procédé selon l'une quelconque des revendications 1 à 6.
